(19) Europäisches Patentamt
European Patent Office
Office européen des brevets

(11) EP 3 498 368 A1

(12) **EUROPEAN PATENT APPLICATION**

(43) Date of publication:
**19.06.2019 Bulletin 2019/25**

(21) Application number: **17306798.4**

(22) Date of filing: **18.12.2017**

(51) Int Cl.:
***B01J 20/22*** ^(2006.01) ***C07F 19/00*** ^(2006.01)
***C07F 5/00*** ^(2006.01) ***C07F 7/00*** ^(2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicants:
- **CENTRE NATIONAL DE LA RECHERCHE SCIENTIFIQUE 75016 Paris (FR)**
- **Ecole Normale Supérieure de Paris 75320 Paris Cedex 05 (FR)**
- **Ecole Nationale Supérieure de Chimie de Montpellier 34296 Montpellier (FR)**
- **Ecole Supérieure de Physique et de Chimie Industrielles de la Ville de Paris 75005 Paris (FR)**
- **Université de Montpellier 34090 Montpellier (FR)**
- **Université de Versailles Saint-Quentin-en-Yvelines 78000 Versailles (FR)**

(72) Inventors:
- **SERRE, Christian 78370 PLAISIR (FR)**
- **WANG, Sujing 78000 VERSAILLES (FR)**
- **MAURIN, Guillaume 34090 MONTPELLIER (FR)**
- **WAHIDUZZAMAN, Mohammad 34090 MONTPELLIER (FR)**
- **DEVAUTOUR-VINOT, Sabine 34070 PRADES-LE-LEZ (FR)**

(74) Representative: **Novagraaf Technologies Bâtiment O2 2, rue Sarah Bernhardt CS90017 92665 Asnières-sur-Seine Cedex (FR)**

# (54) ALIPHATIC ZR-, HF-, AND LN-BASED INORGANIC-ORGANIC HYBRID SOLID MOF MATERIALS, METHODS FOR PREPARING SAME AND USES THEREOF

(57) The present invention relates to crystalline Zr-, Hf-, Ln-based MOFs having aliphatic or heteroaliphatic, preferably aliphatic, linkers; a process of preparing same and uses thereof, particularly as separation/purification material, or as proton conductive material (fuel cells), or as water sorption material, or as catalyst; for example for gas separation, small molecule separation, for $CO_2/N_2$ separation, separation of chiral molecules, size/shape-based molecule separation, or separation/extraction of metallic ions, as water sorption material, in adsorption-type cooling/heating systems, as catalyst, in biomass conversion systems/reactions.

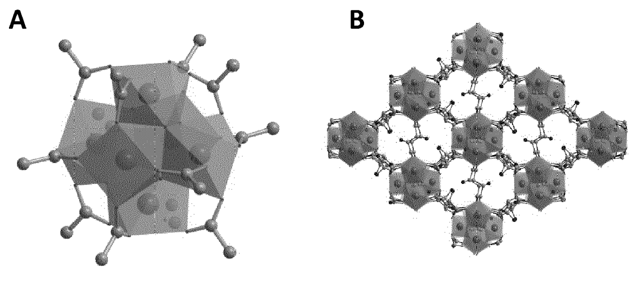


**FIGURE 1**

EP 3 498 368 A1

## Description

## FIELD OF THE INVENTION

The present invention relates to crystalline Zr-, Hf-, Ln-based MOFs having aliphatic or heteroaliphatic, preferably aliphatic, linkers; a process of preparing same and uses thereof, particularly as separation/purification material, or as proton conductive material (fuel cells), or as water sorption material, or as catalyst; for example for gas separation, small molecule separation, for $CO_2/N_2$ separation, separation of chiral molecules, size/shape-based molecule separation, or separation/extraction of metallic ions, as water sorption material, in adsorption-type cooling/heating systems, as catalyst, in biomass conversion systems/reactions.

## BACKGROUND OF THE INVENTION

Metallo-organic lattices or metal-organic frameworks (MOFs) are porous coordination polymers, having an inorganic-organic hybrid framework that comprises metal ions and organic ligands coordinated to the metal ions. These materials are organized into one-, two- or three-dimensional lattices, in which the metallic species are joined together periodically by spacer ligands. The framework of these solids has both inorganic parts and organic parts, the cavities of which may be occupied by water molecules or by organic molecules that are easy to extract without deterioration of the backbone.

These materials exhibit a crystalline structure, are usually porous and offer many potential industrial applications such as gas storage, adsorption of liquids, separation of liquids or gases, catalysis, controlled release of medicaments, etc.

Zr-MOFs for example have witnessed a dramatic exploration and development during the last decade. Not only considerable amount of new structures with various typologies have been discovered successfully, but also comprehensive studies on their thermal/chemical/mechanical stability and wide range of potential applications have been updated significantly from both theoretical simulation and experiment points of view. However, existent reports on Zr-MOFs mainly emphasized their large permanent porosity with surface area as high as possible in the structures, which inevitably requires rigid organic linkers generally built with conjugated aromatic moieties. Thus Zr-MOFs reported so far are rigid constructs most often built with conjugated aromatic linkers, and are therefore more suited for large cavity-based applications, such as gas storage and catalysis.

However, other applications, such as molecule separation, prefer or require on the contrary small pores with certain size and shape. In order to make known rigid Zr-MOFs suitable for this type of applications, different strategies including linker functionalization, mixed linker installation and post modification have been developed. Nevertheless, the complexity of pre- or post- functionalization remains cumbersome and problematic. In addition, there are still several severe drawbacks associated with known rigid Zr-MOFs which are well recognized as hampering the practical applications of these materials, such as the use of toxic and non-scalable reaction conditions, limit of solubility of aromatic conjugated linkers in solvents conventionally used in MOF synthesis, time and energy consuming activation process.

Therefore, there remains a need for the development of MOF materials, particularly MOFs akin to Zr-based MOF materials, with properties that outperform those of all the reported Zr-MOFs so far.

## BRIEF DESCRIPTION OF THE DRAWINGS

**Figure 1** shows a crystal structure of a Zr-based MOF solid according to the invention: 12-connected $Zr_6O_4(OH)_4$ cluster SBU (A) and 3D framework structure (B) of Zr-Asa-I MOF of Example 1.

**Figure 2** shows a crystal structure of a Zr-based MOF solid according to the invention: 8-connected $Zr_6O_4(OH)_4$ cluster SBU (A) with terminal bridging formate groups/hydroxyl groups and 3D framework structure (B) of Zr-malic MOF of Example 4.

**Figure 3** shows PXRD patterns of Zr-aspartic-I MOF, Hf-aspartic-I MOF and Ce-aspartic-I MOF, showing the isostructural characters of those three compounds despite the difference of their metal ions.

**Figure 4** shows predicted adsorption isotherms of $N_2$ and $CO_2$ in Zr-Asa-I obtained from the co-adsorption GCMC simulations performed at 303K.

**Figure 5** shows a snapshot of adsorbed $CO_2$ molecules in the Zr-Asa-I pores (A) and the local view preferred orientation of $CO_2$ molecules within the pores (B) obtained from the GCMC simulation performed at P = 0.10 bar

and T = 300 K.

## DEFINITIONS

To facilitate an understanding of the present invention, a number of terms and phrases are defined below:

As used herein other than the claims, the terms "a," "an," "the," and/or "said" means one or more. As used herein in the claim(s), when used in conjunction with the words "comprise," "comprises" and/or "comprising," the words "a," "an," "the," and/or "said" may mean one or more than one. As used herein and in the claims, the terms "having," "has," "is," "have," "including," "includes," and/or "include" has the same meaning as "comprising," "comprises," and "comprise." As used herein and in the claims "another" may mean at least a second or more. As used herein and in the claims, "about" refers to any inherent measurement error or a rounding of digits for a value (e.g., a measured value, calculated value such as a ratio), and thus the term "about" may be used with any value and/or range.

The phrase "a combination thereof" "a mixture thereof" and such like following a listing, the use of "and/or" as part of a listing, a listing in a table, the use of "etc." as part of a listing, the phrase "such as," and/or a listing within brackets with "e.g.," or i.e., refers to any combination (e.g., any sub-set) of a set of listed components, and combinations and/or mixtures of related species and/or embodiments described herein though not directly placed in such a listing are also contemplated. Such related and/or like genera(s), sub-genera(s), specie(s), and/or embodiment(s) described herein are contemplated both in the form of an individual component that may be claimed, as well as a mixture and/or a combination that may be described in the claims as "at least one selected from," "a mixture thereof" and/or "a combination thereof."

In general, the term "substituted" whether preceded by the term "optionally" or not, and substituents contained in formulae of this invention, refer to the replacement of hydrogen radicals in a given structure with the radical of a specified substituent. When more than one position in any given structure may be substituted with more than one substituent selected from a specified group, the substituent may be either the same or different at every position. As used herein, the term "substituted" is contemplated to include all permissible substituents of organic compounds.

As used herein, the term "alkyl", refers to straight and branched alkyl groups. In certain embodiments, as used herein, "lower alkyl" is used to indicate those alkyl groups (substituted, unsubstituted, branched or unbranched) having about 1-6 carbon atoms. Illustrative alkyl groups include, but are not limited to, for example, methyl, ethyl, n-propyl, isopropyl, allyl, n-butyl, sec-butyl, isobutyl, tert-butyl, n-pentyl, sec-pentyl, isopentyl, tert-pentyl, n-hexyl, sec-hexyl, moieties and the like, which again, may bear one or more substituents.

As used herein, the term "aryl" refers to an aromatic system comprising at least one ring that satisfies Hückel's aromaticity rule. Said aryl is optionally substituted and may comprise from 6 to 50 carbon atoms, for example 6 to 20 carbon atoms, for example 6 to 10 carbon atoms. Examples of aryl groups include, but are not limited to, phenyl, indanyl, indenyl, naphthyl, phenanthryl and anthracyl.

In general, the term "heteroaryl moiety", as used herein, refers a cyclic unsaturated radical having from about five to about ten ring atoms of which one ring atom is selected from S, O and N; zero, one or two ring atoms are additional heteroatoms independently selected from S, O and N; and the remaining ring atoms are carbon, the radical being joined to the rest of the molecule via any of the ring atoms, such as, for example, pyridyl, pyrazinyl, pyrimidinyl, pyrrolyl, pyrazolyl, imidazolyl, thiazolyl, triazolyl, oxazolyl, isooxazolyl, thiadiazolyl, oxadiazolyl, thiophenyl, furany1, quinolinyl, isoquinolinyl, and the like.

The term "heteroalkyl", as used herein, refers to alkyl moieties in which one or more carbon atoms in the main chain have been substituted with a heteroatom. Thus, a heteroalkyl group refers to an alkyl chain which contains one or more oxygen, sulfur, nitrogen, phosphorus or silicon atoms, i.e., in place of carbon atoms, for example, at least one heteroatom to 20 heteroatoms, such as one to 15 heteroatoms, or one to 5 heteroatoms, or one, two, three or four heteroatoms. Heteroalkyl moieties may be branched or linear unbranched.

The terms "halo" and "halogen" as used herein refer to an atom selected from fluorine, chlorine, bromine and iodine.

As used herein, the term "oxocluster" refers to a group of atoms containing at least two Zr, Hf or Ln metal atoms linked via ionocovalent bonds directly via O atoms.

As used herein, the symbol "Ln" refers to a lanthanide atom, such as La, Ce, Pr, Nd, Pm, Sm, Eu, Gd, Tb, Dy, Ho, Er, Tm and Yb.

As used herein, the term "independently" refers to the fact that the substituents, atoms or moieties to which these terms refer, are selected from the list of variables independently from each other (i.e., they may be identical or the same).

As used herein, the term "about" can refer to a variation of $\pm 5\%$, $\pm 10\%$, $\pm 20\%$, or $\pm 25\%$, of the value specified. For example, "about 50" percent can in some embodiments carry a variation from 45 to 55 percent. For integer ranges,

the term "about" can include one or two integers greater than and/or less than a recited integer. Unless indicated otherwise herein, the term "about" is intended to include values, e.g., concentration values, proximate to the recited range that are equivalent in terms of the functionality of the individual ingredient, the composition, or the embodiment.

As used herein, the term "and/or" means any one of the items, any combination of the items, or all of the items with which this term is associated.

As will be understood by the skilled artisan, all numbers, including those expressing quantities of ingredients, properties such as cavity/pore size and BET specific surface area, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.

As will be understood by one skilled in the art, for any and all purposes, particularly in terms of providing a written description, all ranges recited herein also encompass any and all possible subranges and combinations of subranges thereof, as well as the individual values making up the range, particularly integer values. A recited range includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.

One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.

As used herein, the expression "three-dimensional structure" is understood to mean a three-dimensional sequence or repetition of units of any one of the oxocluster formulae defined in the present document (e.g., formula ($I_0$)), as is conventionally understood in the field of MOF materials, which are also characterized as "organometallic polymers".

As used herein, the term "solid" refers to any type of crystalline material. Said solid may be, for example, in the form of crystals, powder or particles of varied forms, for example of spherical, lamellar, etc. form. The particles may be in the form of nanoparticles.

As used herein, the term "crystalline solid" or "crystalline material" refers to a solid material whose constituents (such as atoms, molecules, or ions) are arranged in a highly ordered microscopic structure, forming a crystal lattice that extends in all directions. Crystalline materials encompass monocrystalline and polycrystalline materials, and exclude amorphous materials. A monocrystalline MOF material (or a single crystal MOF) consists of a MOF in which the crystal lattice of the entire solid is continuous, unbroken (with no grain boundaries) to its edges. This is to be opposed to amorphous materials, in which the atomic order is limited to short range order only. Polycrystalline materials lie between these two extremes; they are made up of small crystals.

As used herein, the term "nanoparticle" refers to a particle smaller than 1 $\mu$m in size. In particular, the solid Zr-, Hf- or Ln-based MOF nanoparticles according to the invention may have a diameter of less than 1000 nanometers, preferably less than 500 nm, more preferably less than 250 nm and most particularly less than 100 nm.

As used herein, the term "ligand" refers to a ligand (including, for example, neutral species and ions) coordinated to at least two Zr, Hf or Ln metals (or two metals in the case of doped Zr-, Hf- or Ln-based materials according to a variant of the invention), which participates in providing distance between these metals and in forming empty spaces or pores.

As used herein, the term "aliphatic linker" or "aliphatic ligand" refers to linker/ligand moieties with a saturated C1-20alkyl chain as the major building block (a single bond is preferred between sp3 carbon atoms of the linker/ligand main chain). The aliphatic linker/ligand may contain one sp2 carbon atom in the aliphatic main chain, with an exo C=C or C=O double bond (i.e., a double bond going away from the main chain, as opposed to a double bond that lies within the aliphatic main chain and makes it unsaturated), but the main chain is otherwise saturated. The aliphatic linker/ligand may be cyclic or acyclic, preferably acyclic. The alkyl skeleton may be non-functionalized, such as succinic acid (with only hydrogen atoms on the carbon atoms of the aliphatic linker's main chain) or with different functional groups, such as aspartic acid with $-NH_2$ group as terminal branch.

As used herein, the term "heteroaliphatic linker" or "heteroaliphatic ligand" refers to linker/ligand moieties with a saturated C1-20heteroalkyl chain as the major building block (a single bond is preferred between sp3 carbon atoms and heteroatoms making up the linker/ligand main chain). The heteroaliphatic linker/ligand may contain one sp2 carbon atom in the heteroaliphatic main chain, with an exo C=C or C=O double bond (i.e., a double bond going away from the

main chain, as opposed to a double bond that lies within the heteroaliphatic main chain and makes it unsaturated), but the main chain is otherwise saturated. The heteroaliphatic linker/ligand may be cyclic or acyclic, preferably acyclic. The heteroalkyl skeleton may be non-functionalized, such as 3,3'-oxydipropionic acid:

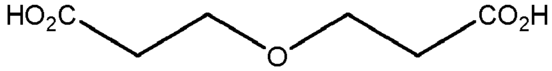

(with only hydrogen atoms on the carbon atoms of the heteroaliphatic linker's main chain) or with different functional groups, such as O-(2-carboxyethyl)serine/

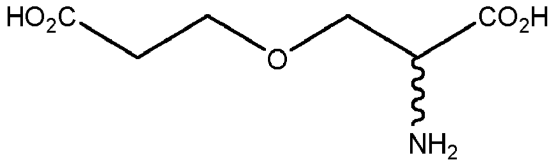

with $-NH_2$ group as terminal branch.

As used herein, "main chain" when referring to aliphatic or heteroaliphatic linker/ligand, refers to the chain of atoms separating the linker/ligand's carboxylate groups that coordinate with the metal atoms of the MOF framework.

As used herein, the term "aliphatic MOF" refers to Zr-, Hf- or Ln-based MOFs according to the invention built with aliphatic linkers/ligands, as defined above.

As used herein, the term "heteroaliphatic MOF" refers to Zr-, Hf- or Ln-based MOFs according to the invention built with heteroaliphatic linkers/ligands, as defined above.

## DETAILED DESCRIPTION OF CERTAIN PREFERRED EMBODIMENTS OF THE INVENTION

In one aspect, the present invention provides crystalline Zr-, Hf- or Ln-based metal-organic framework (MOF) material wherein the Zr, Hf or Ln atoms throughout the MOF framework are connected with aliphatic or heteroaliphatic, preferably aliphatic, polycarboxylate linkers L; wherein the carboxylate groups in the linkers' or heteroaliphatic, preferably aliphatic, chain are separated by at least one carbon atom.

Advantageously, L is preferably not adipate or trans-1,4-cyclohexanedicarboxylate, particularly in Zr-based MOFs according to the invention. Advantageously, at least a subset of linkers L in the MOF framework is preferably different from adipate or trans-1,4-cyclohexanedicarboxylate, particularly in Zr-based MOFs according to the invention.

Advantageously, the MOF material may have a BET specific surface area < 500 $m^2/g$, preferably <450 $m^2/g$, preferably <400 $m^2/g$, preferably <350 $m^2/g$, preferably <300 $m^2/g$, preferably <250 $m^2/g$, preferably <200 $m^2/g$, preferably <150 $m^2/g$, preferably <100 $m^2/g$. Advantageously, the MOF material may have a BET specific surface area between 50-500 $m^2/g$, preferably between 50-450 $m^2/g$, more preferably between 50-400 $m^2/g$, most preferably between 50-375 $m^2/g$; for example when the MOF material is a Zr-based MOF.

Crystalline Zr-, Ln- and Hf-based inorganic-organic hybrid MOF materials according to the invention may be constituted of a three-dimensional succession of building units of formula $\mathbf{I_0}$:

$$M_6O_4(OH)_4L_xA_y.nH_2O \quad (\mathbf{I_0})$$

wherein in each building unit,

each occurrence of M independently represents Zr, Ln or Hf or another metal; such as Cu, Co, Ni, Mn, V, Cr, Fe, Ru, Sn, or Nb; wherein at least 60%, preferably at least 65%, preferably at least 70%, of M atoms in the MOF material are Zr, Ln or Hf atoms;

L represents an aliphatic or heteroaliphatic, preferably aliphatic, polycarboxylate linker;

x represents the number of aliphatic or heteroaliphatic, preferably aliphatic, ligands L in the building unit;

y represents the number of A ligands in the building unit, where A is selected from $Cl^-$, $HCO_2^-$ or $MeCO_2^-$; wherein a subset of A ligands in the MOF material may be replaced by ligands independently selected from $OH^-$, $H_2O$, $R^3$-$(SO_3)^-$, $R^3$-$(PO_3)H^-$, wherein $R^3$, for each occurrence, independently represents OH, $C_{1-12}$alkyl, $C_{1-12}$heteroalkyl,

$C_{6-10}$aryl, $C_{5-10}$heteroaryl; where each of the foregoing alkyl and heteroalkyl moiety may be linear or branched and cyclic or acyclic; and

n represents the average number of guest water molecules that may be present per building unit in the MOF material.

Likewise, as stated generally above, advantageously in formula $\mathbf{I_0}$, L is preferably not adipate or trans-1,4-cyclohexanedicarboxylate, particularly in Zr-based MOFs according to the invention. Advantageously, in at least a subset of building units of formula $\mathbf{I_0}$, linker L is preferably different from adipate or trans-1,4-cyclohexanedicarboxylate, particularly in Zr-based MOFs (i.e., when M represents Zr or another metal; such as Cu, Co, Ni, Mn, V, Cr, Fe, Ru, Sn, or Nb; wherein at least 60%, preferably at least 65%, preferably at least 70%, of M atoms in the MOF material are Zr atoms).

Advantageously, the linkers L may be acyclic saturated aliphatic or heteroaliphatic, preferably aliphatic, polycarboxylate linkers.

Advantageously, the linkers L may be aliphatic or heteroaliphatic, preferably aliphatic, dicarboxylate linkers.

Advantageously, the linkers L, or at least a subset of the linkers L, may be from naturally occurring compounds bearing at least two carboxylate groups, such as naturally occurring amino acids (e.g., aspartic acid, glutamic acid).

Advantageously, the linkers L, or at least a subset of the linkers L, may be chiral (e.g., L-aspartic acid, L-glutamic acid).

Advantageously, the linkers L, or at least a subset of the linkers L, may have the following structure:

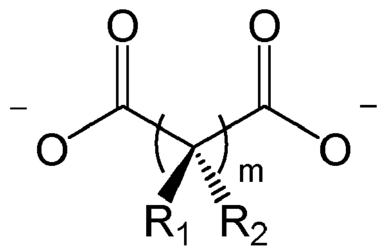

wherein

**m** represents an integer from 1 to 12; and

each occurrence of $\mathbf{R_1}$ and $\mathbf{R_2}$ independently represents H, a halogen atom, -OH, $-OR_A$, $-NH_2$, $-NR_BR_C$, -C(=O)OH, $-C(=O)R_D$, $-SO_3H$, -SH, $-SR_E$, $-P(R_F)_3$; or one occurrence of $R_1$ and $R_2$ taken together with the carbon atom to which they are attached may form a C=O or a $C=C-C(=O)OR_G$ moiety;

wherein $R_A$, $R_B$, $R_C$, $R_D$, and $R_E$, for each occurrence, independently represent a linear or branched $C_{1-10}$ alkyl, $C_{1-10}$heteroaryl or $C_{6-10}$ aryl moiety; $R_F$, for each occurrence, independently represents a $C_{1-10}$heteroaryl or $C_{6-10}$ aryl moiety; and $R_G$, for each occurrence, independently represents H or a linear or branched $C_{1-10}$ alkyl, $C_{1-10}$heteroaryl or $C_{6-10}$ aryl moiety;

wherein each of the foregoing aryl or heteroaryl moieties may be, individually, further substituted with one or more linear or branched $C_{1-6}$ alkyl, $C_{1-10}$heteroaryl or $C_{6-10}$ aryl moieties; and wherein each of the foregoing alkyl moieties may preferably be acyclic.

Advantageously, the linkers L, or at least a subset of the linkers L, may have the following structure:

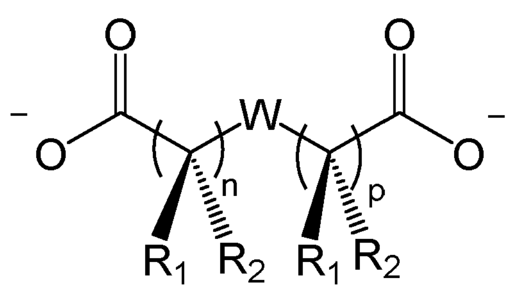

wherein

**W** represents O, S, $NR_{A1}$, Se or $SiR_{B1}R_{C1}$, preferably W represents O, S, or $NR_{A1}$, more preferably O;

wherein $R_{A1}$ represents H or a linear or branched $C_{1-10}$ alkyl, $C_{1-10}$heteroaryl or $C_{6-10}$ aryl moiety; preferably H or a linear or branched $C_{1-6}$ alkyl or a $C_6$ aryl moiety; more preferably H or a linear or branched $C_{1-6}$ alkyl; still more preferably H, methyl, ethyl, *n*-proyl, *i*-propyl, *n*-butyl, *sec*-butyl or tert-butyl; most preferably H, methyl or ethyl;
$R_{B1}$ and $R_{C1}$ independently represent a linear or branched $C_{1-10}$ alkyl, $C_{1-10}$heteroaryl or $C_{6-10}$ aryl moiety; preferably a linear or branched $C_{1-6}$ alkyl or a $C_6$ aryl moiety; more preferably a linear or branched $C_{1-6}$ alkyl; still more preferably methyl, ethyl, *n*-proyl, *i*-propyl, *n*-butyl, sec-butyl or tert-butyl; most preferably methyl or ethyl;

**n** and **p** independently represent an integer from 1 to 6, preferably 2 to 4; more preferably 2 or 3. Advantageously, n+p ≤10; preferably n+p ≤8; more preferably n+p ≤6; most preferably n+p ≤4; and

each occurrence of $\mathbf{R_1}$ and $\mathbf{R_2}$ independently represents H, a halogen atom, -OH, $-OR_A$, $-NH_2$, $-NR_BR_C$, -C(=O)OH, $-C(=O)R_D$, $-SO_3H$, -SH, $-SR_E$, $-P(R_F)_3$; or one occurrence of $R_1$ and $R_2$ taken together with the carbon atom to which they are attached may form a C=O or a $C=C-C(=O)OR_G$ moiety;

wherein $R_A$, $R_B$, $R_C$, $R_D$, and $R_E$, for each occurrence, independently represent a linear or branched $C_{1-10}$ alkyl, $C_{1-10}$heteroaryl or $C_{6-10}$ aryl moiety; $R_F$, for each occurrence, independently represents a $C_{1-10}$heteroaryl or $C_{6-10}$ aryl moiety; and $R_G$, for each occurrence, independently represents H or a linear or branched $C_{1-10}$ alkyl, $C_{1-10}$heteroaryl or $C_{6-10}$ aryl moiety;

wherein each of the foregoing aryl or heteroaryl moieties may be, individually, further substituted with one or more linear or branched $C_{1-6}$ alkyl, $C_{1-10}$heteroaryl or $C_{6-10}$ aryl moieties; and wherein each of the foregoing alkyl moieties may preferably be acyclic.

Advantageously, the linkers L, or at least a subset of the linkers L, may have the following structure:

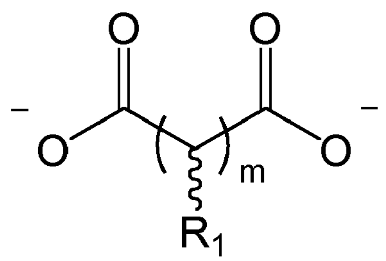

wherein

**m** represents an integer from 1 to 6; and
each occurrence of $\mathbf{R_1}$ independently represents H, a halogen atom, -OH, - $OR_A$, $-NH_2$, $-NR_BR_C$, -C(=O)OH, $-C(=O)R_D$, $-SO_3H$, -SH, $-SR_E$, $-P(R_F)_3$; preferably, each occurrence of $\mathbf{R_1}$ independently represents H, -OH, or-$NH_2$; most preferably one occurrence of $\mathbf{R_1}$ represents H, -OH, or $-NH_2$ and the other occurrences of $\mathbf{R_1}$ represent H.

Advantageously, the linkers L, or at least a subset of the linkers L, may have the following structure:

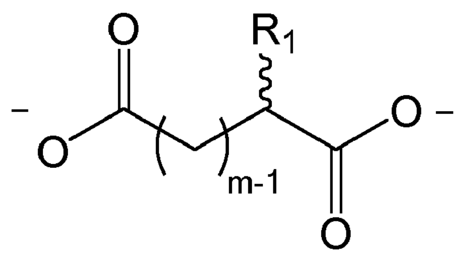

wherein

m represents an integer from 2 to 6; and
$\mathbf{R_1}$ represents H, a halogen atom, -OH, $-OR_A$, $-NH_2$, $-NR_BR_C$, -C(=O)OH, - $C(=O)R_D$, $-SO_3H$, -SH, $-SR_E$, $-P(R_F)_3$;

preferably, $\mathbf{R_1}$ represents H, -OH, or-$NH_2$; most preferably $\mathbf{R_1}$ represents-OH, or -$NH_2$.

Advantageously, the linkers L, or at least a subset of the linkers L, may have the following structure:

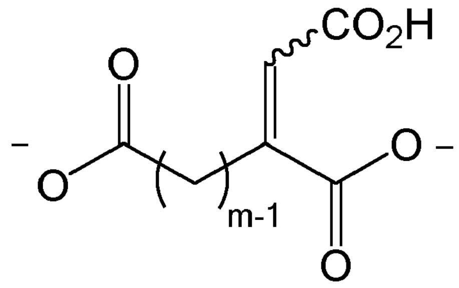

wherein

**m** represents an integer from 2 to 6, preferably 2 to 4; more preferably 2 or 3.

Advantageously, the linkers L, or at least a subset of the linkers L, may have the following structure:

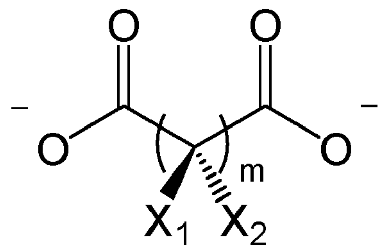

wherein

**m** represents an integer from 1 to 12; preferably 1 to 10; more preferably 1 to 8; and
each occurrence of $\mathbf{X_1}$ and $\mathbf{X_2}$ independently represents a halogen atom; preferably F.

Advantageously, the linkers L, or at least a subset of the linkers L, may have the following structure:

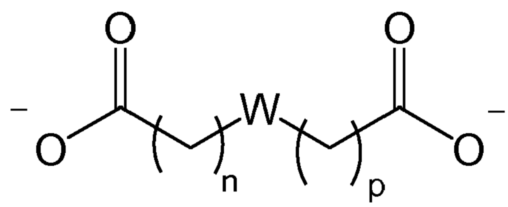

wherein

**W** represents O, S, $NR_{A1}$, Se or $SiR_{B1}R_{C1}$, preferably W represents O, S, or $NR_{A1}$, more preferably O;

wherein $R_{A1}$ represents H or a linear or branched $C_{1-10}$ alkyl, $C_{1-10}$heteroaryl or $C_{6-10}$ aryl moiety; preferably H or a linear or branched $C_{1-6}$ alkyl or a $C_6$ aryl moiety; more preferably H or a linear or branched $C_{1-6}$ alkyl; still more preferably H, methyl, ethyl, *n*-proyl, *i*-propyl, *n*-butyl, *sec*-butyl or tert-butyl; most preferably H, methyl or ethyl;
$R_{B1}$ and $R_{C1}$ independently represent a linear or branched $C_{1-10}$ alkyl, $C_{1-10}$heteroaryl or $C_{6-10}$ aryl moiety; preferably a linear or branched $C_{1-6}$ alkyl or a $C_6$ aryl moiety; more preferably a linear or branched $C_{1-6}$ alkyl; still more preferably methyl, ethyl, *n*-proyl, *i*-propyl, *n*-butyl, sec-butyl or tert-butyl; most preferably methyl or ethyl; and

**n** and **p** independently represent an integer from 1 to 6, preferably 2 to 4; more preferably 2 or 3. Advantageously, n+p ≤10; preferably n+p ≤8; more preferably n+p ≤6; most preferably n+p ≤4.

Advantageously, the linkers L, or at least a subset of the linkers L, may have the following structure:

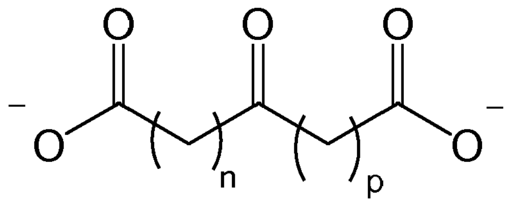

wherein

**n** and **p** independently represent an integer from 1 to 6, preferably 2 to 4; more preferably 2 or 3. Advantageously, n+p ≤10; preferably n+p ≤8; more preferably n+p ≤6; most preferably n+p ≤4.

Advantageously, the linkers L, or at least a subset of the linkers L, may have one of the following structures:

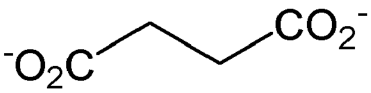 , 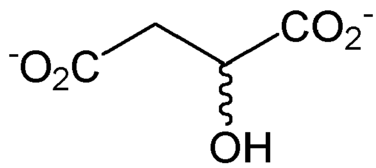 ,

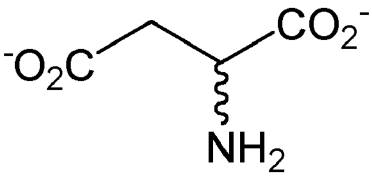 , 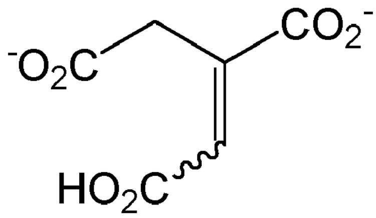 ,

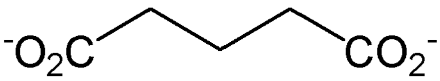 , 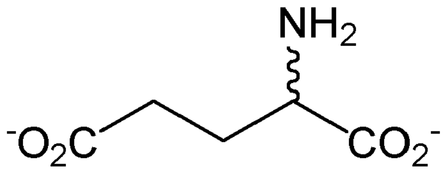 ,

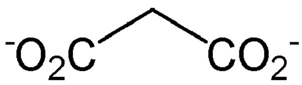 , 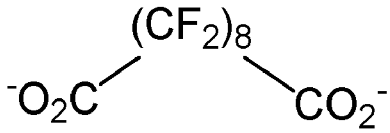

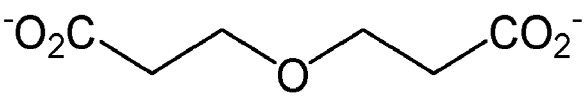

or

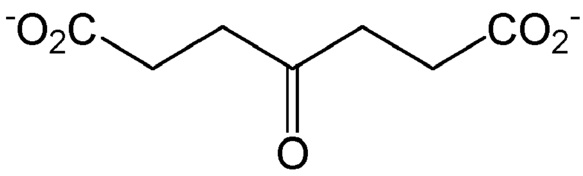

.

Advantageously, the linkers L, or at least a subset of the linkers L, may be chiral and may have one of the following structures:

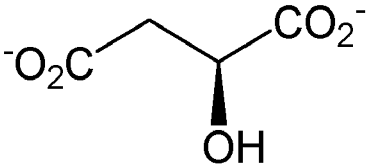

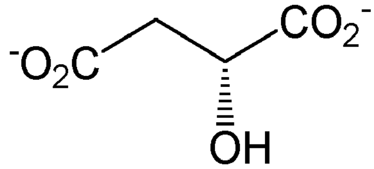

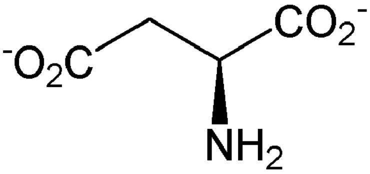

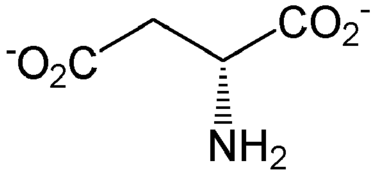

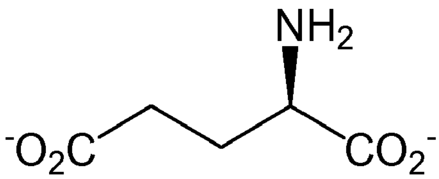

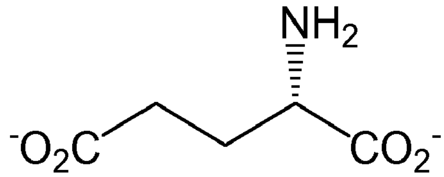

Preferably, the linker may be L-aspartate or L-glutamate.

Advantageously, all occurrences of A independently represent a ligand selected from $Cl^-$, $HCO_2^-$ or $MeCO_2^-$. Advantageously, occurrences of A as $Cl^-$, $HCO_2^-$ or $MeCO_2^-$ ligand may be replaced by another ligand selected from $OH^-$, $H_2O$, sulfanilate, or any sulfonate or phosphonate moiety. For example, sulfonate moieties may be pyridinyl-3-sulfonate, (1R)-(-)-camphor-10-sulfonate, hydroxylamine-O-sulfonate, 3-aminopropyl-1-sulfonate, 4-hydrozinobenzenesulfonate, 5-sulfosalicylate, or isoquinolinyl-5-sulfonate.

Advantageously, the crystalline Zr-, Hf- or Ln-based MOFs according to the invention, including Zr-, Hf- or Ln-based MOF material constituted of building units of formula ($I_0$), may be doped with one or more metals, such as Cu, Co, Ni, Mn, V, Cr, Fe, Ru, Sn, or Nb.

As used herein, with respect to doping with one or more metals, the term "doping" or "doped" refers to placing other metal atoms such as Cu, Co, Ni, Mn, V, Cr, Fe, Ru, Sn, or Nb, in the Zr-, Hf- or Ln-based material lattice in place of Zr, Hf or Ln atoms, respectively. For example a "Cu-doped material" is a Zr-, Hf- or Ln-based material according to the invention that has "implanted" Cu atoms replacing Zr, Hf or Ln atoms in the material's lattice.

As such, metal ions such as $Cu^{2+}$, $Fe^{2+}$, $Fe^{3+}$, $Co^{2+}$, $Co^{3+}$, $Ni^{2+}$, $Mn^{2+}$, $Mn^{3+}$, $Mn^{4+}$, $V^{3+}$, $V^{4+}$, $Cr^{3+}$, $Ru^{3+}$, $Ru^{4+}$, $Sn^{4+}$, $Nb^{4+}$ or $Nb^{5+}$, may be incorporated into the material's structure in place of Zr, Hf or Ln metal centers.

Crystalline Zr-based inorganic-organic hybrid MOF materials, as defined above, where at least a subset of building units (i.e., at least one building unit) of formula $\mathbf{I_0}$, at least one occurrence of M is different than Zr will be referred herein as "doped Zr-based MOF materials". Likewise, crystalline Hf-based inorganic-organic hybrid MOF materials, as defined above, where at least a subset of building units (i.e., at least one building unit) of formula $\mathbf{I_0}$, at least one occurrence of M is different than Hf will be referred herein as "doped Hf-based MOF materials". Crystalline Ln-based inorganic-organic hybrid MOF materials, as defined above, where at least a subset of building units (i.e., at least one building unit) of formula $\mathbf{I_0}$, at least one occurrence of M is different than Ln will be referred herein as "doped Ln-based MOF materials".

As mentioned above and detailed *infra,* Zr-, Ln- and Hf-based MOF materials according to the invention may be doped with one or more metals, such as Cu, Co, Ni, Mn, V, Cr, Fe, Ru, Sn, or Nb. As such, the present invention also provides crystalline doped Zr-, Ln-and Hf-based inorganic-organic hybrid solid metal organic framework (MOF) material wherein the metal atoms throughout the MOF framework are connected with aliphatic or heteroaliphatic, preferably aliphatic, polycarboxylate linkers L; wherein the carboxylate groups in the linkers' aliphatic or heteroaliphatic,

preferably aliphatic, chain are separated by at least one carbon atom. L may be as defined generally or any variant above. Advantageously, L is preferably not adipate or trans-1,4-cyclohexanedicarboxylate, particularly in doped Zr-based MOFs according to the invention. Advantageously, at least a subset of linkers L in the MOF framework is preferably different from adipate or trans-1,4-cyclohexanedicarboxylate, particularly in doped Zr-based MOFs according to the invention.

Advantageously, the Zr, Hf or Ln atoms in the Zr-, Hf- or Ln-based MOF materials, respectively, represent at least 60%, preferably at least 65%, preferably at least 70%, of the total metal atoms present in the doped MOF lattice.

Advantageously, doped Zr-, Ln- and Hf-based MOF materials may have a BET specific surface area < 500 $m^2/g$, preferably <450 $m^2/g$, preferably <400 $m^2/g$, preferably <350 $m^2/g$, preferably <300 $m^2/g$, preferably <250 $m^2/g$, preferably <200 $m^2/g$, preferably <150 $m^2/g$, preferably <100 $m^2/g$. Advantageously, the MOF material may have a BET specific surface area between 50-500 $m^2/g$, preferably between 50-450 $m^2/g$, more preferably between 50-400 $m^2/g$, most preferably between 50-375 $m^2/g$; for example when the doped MOF material is a doped Zr-based MOF.

Crystalline doped Zr-, Ln- and Hf-based inorganic-organic hybrid solid metal organic framework (MOF) material according to the invention may be constituted of a three-dimensional succession of building units of formula $\mathbf{I_0}$, as defined above, wherein at least a subset of M metals in the material's framework represent Cu, Co, Ni, Mn, V, Cr, Fe, Ru, Sn, or Nb (in other words a subset of Zr, Hf or Ln atoms are replaced by Cu, Co, Ni, Mn, V, Cr, Fe, Ru, Sn, or Nb atoms in the MOF material lattice).

As used herein, the term "Zr-, Hf- or Ln-based inorganic-organic hybrid solid material" is interchangeable with "crystalline Zr-, Hf- or Ln-based inorganic-organic hybrid MOF material", and refers to both pure and doped crystalline Zr-, Hf- or Ln-based MOF materials.

As used herein, the term "crystalline pure Zr-, Hf- or Ln-based MOF material" refers to a crystalline Zr-, Hf- or Ln-based MOF material wherein all the metal centers in the MOF materials are Zr, Hf or Ln atoms, respectively.

As used herein, the term "crystalline doped Zr-, Hf- or Ln-based MOF material" refers to a crystalline pure Zr-, Hf- or Ln-based MOF material, as defined above, wherein some of the Zr, Hf or Ln atoms, respectively, are replaced with one or more metal atoms different from Zr, Hf or Ln. In other words, the metal atoms different from Zr, Hf or Ln do not occupy distinct crystallographic positions from the original Zr, Hf or Ln sites. For example, the other metal atoms may be selected from Cu, Co, Ni, Mn, V, Cr, Fe, Ru, Sn, or Nb. It is understood that in crystalline doped Zr-, Hf- or Ln-based MOF material according to the present invention, the Zr, Hf or Ln atoms, respectively, in the doped material's lattice are preponderant as compared to the other metal atoms different from Zr, Hf or Ln.

For example, in the doped crystalline Zr-based MOF materials according to the invention, the Zr atoms preferably represent at least 65%, preferably at least 70%, preferably at least 71%, preferably at least 72%, preferably at least 73%, preferably at least 74%, preferably at least 75%, preferably at least 76%, preferably at least 77%, preferably at least 78%, preferably at least 79%, preferably at least 80%, preferably at least 81%, preferably at least 82%, preferably at least 83%, preferably at least 84%, preferably at least 85%, preferably at least 86%, preferably at least 87%, preferably at least 88%, preferably at least 89%, preferably at least 90%, preferably at least 91%, preferably at least 92%, preferably at least 93%, preferably at least 94%, preferably at least 95%, preferably at least 96%, preferably at least 97%, preferably at least 98%, preferably at least 99%, of the total metal atoms present in the doped MOF lattice.

Advantageously, in the doped crystalline Hf-based MOF materials according to the invention, the Hf atoms preferably represent at least 65%, preferably at least 70%, preferably at least 71 %, preferably at least 72%, preferably at least 73%, preferably at least 74%, preferably at least 75%, preferably at least 76%, preferably at least 77%, preferably at least 78%, preferably at least 79%, preferably at least 80%, preferably at least 81%, preferably at least 82%, preferably at least 83%, preferably at least 84%, preferably at least 85%, preferably at least 86%, preferably at least 87%, preferably at least 88%, preferably at least 89%, preferably at least 90%, preferably at least 91 %, preferably at least 92%, preferably at least 93%, preferably at least 94%, preferably at least 95%, preferably at least 96%, preferably at least 97%, preferably at least 98%, preferably at least 99%, of the total metal atoms present in the doped MOF lattice.

Advantageously, in the doped crystalline Ln-based MOF materials according to the invention, the Ln atoms preferably represent at least 65%, preferably at least 70%, preferably at least 71%, preferably at least 72%, preferably at least 73%, preferably at least 74%, preferably at least 75%, preferably at least 76%, preferably at least 77%, preferably at least 78%, preferably at least 79%, preferably at least 80%, preferably at least 81%, preferably at least 82%, preferably at least 83%, preferably at least 84%, preferably at least 85%, preferably at least 86%, preferably at least 87%, preferably at least 88%, preferably at least 89%, preferably at least 90%, preferably at least 91%, preferably at least 92%, preferably at least 93%, preferably at least 94%, preferably at least 95%, preferably at least 96%, preferably at least 97%, preferably at least 98%, preferably at least 99%, of the total metal atoms present in the doped MOF lattice.

Advantageously, in the pure and/or doped crystalline Zr-, Ln- and Hf-based inorganic-organic hybrid MOF materials according to the invention, the metal atoms (Zr atoms, in case of pure crystalline Zr-based MOF materials) may be coordinated to at least one aliphatic or heteroaliphatic, preferably aliphatic, polycarboxylate linker L, as defined generally above and in classes, subclasses and variants herein. According to the invention, in the pure and/or doped crystalline Zr-, Hf- or Ln-based MOF materials according to the invention, the building units (metal-oxo clusters) that

make up the MOF lattice may comprise any conventional ligand known in the art of MOFs, in addition to the at least one aliphatic or heteroaliphatic, preferably aliphatic, polycarboxylate linkers L. For example, the metal-oxo clusters of the pure and/or doped crystalline Zr-, Hf- or Ln-based MOF materials according to the invention, may comprise ligands independently selected from $HCO_2^-$, $MeCO_2^-$, $OH^-$ , $H_2O$, $R^3$-$(SO_3)^-$, $R^3$-$(PO_3)H^-$, wherein $R^3$, for each occurrence, independently represents OH, $C_{1-12}$alkyl, $C_{1-12}$heteroalkyl, $C_{6-10}$aryl, $C_{5-10}$heteroaryl; where each of the foregoing alkyl and heteroalkyl moiety may be linear or branched and cyclic or acyclic. One or more water molecules may additionally be coordinated to the Zr, Hf or Ln center (or metal center in the case of doped Zr-, Hf- or Ln-based MOFs according to the invention) in each Zr-, Hf- or Ln-oxo cluster (or in each metal-oxo cluster in the case of doped Zr-, Hf- or Ln-based MOFs according to the invention).

The solid material in accordance with the invention, also referred to herein as pure or doped Zr-, Hf- or Ln-based MOF, has the advantage of being based on Zr, Hf or Ln and aliphatic or heteroaliphatic, preferably aliphatic, polycarboxylate linkers, with a particular topology, that gives these materials useful specific properties.

The crystalline spatial organization of the solid material of the present invention, is the basis of the particular characteristics and properties of this material, and for example governs the size and shape of the cavities (or pores) which has an influence on the specific surface area of the material and on the capacities for separating gases or for size/shape-based molecule separation for example.

For example, aliphatic and heteroaliphatic Zr-based MOFs according to the invention may exist as 8-connected or 12-connected Zr6 building unit- based MOFs (e.g., Zr6 oxoclusters of formula $\mathbf{I_0}$). Generally, 12-connected Zr6 building unit-based MOFs according to the invention are of the isostructure of the reported Zr-Fum (MOF-801) compound. As such, their pores are basically with a triangle shaped window of a diameter similar to the molecular length of the aliphatic or heteroaliphatic linker/ligand used to build them. Considering the flexibility of the aliphatic/heteroaliphatic backbones and diverse functional groups attached of the linkers, the shape and character of the pores may be described as distorted triangle pores with variable chemical environments (depending on the nature of the linker/ligand, in particular the substituents that may be present on the linker/ligand). The diameter could vary from 3 Å to 1 nm roughly.

As for 8-connected Zr6 building units based MOFs according to the invention, they generally have 3D pore systems with square shape windows along all the axes. Considering that distorted Cl- species may be trapped within the MOF pores, the inner shape of the pore is likely irregular. The size of pore window may be in a range of 3 Å to 1 nm roughly.

Importantly, as the result of the flexible nature of the aliphatic/heteroaliphatic backbones in the linker/lignad, the MOFs according to the present invention generally exhibit a structural 'breathing' feature when solvent molecules get absorbed within their pores. Thus the pores' shape and diameter will change upon breathing. The Zr-, Hf- or Ln-based MOF materials of the present invention may may swell and shrink considerably, causing the aperture of the pores to vary as a function of the nature of the adsorbed molecules.

As used herein, the term "flexible structure" or "flexible lattice" or "breathing" refers to the property/ability of MOF structures of the present invention to swell or contract with a substantial amplitude, in particular with an amplitude of greater than 10%, for example greater than 50%.

For example, aliphatic/heteroaliphatic Zr-, Hf- or Ln-based MOFs according to the invention may swell or contract with an amplitude from 10% to 300% and preferably from 50% to 300%.

Accordingly, the crystalline Zr-, Hf- or Ln-based MOF materials of the present invention also exhibit some flexibility in the lattice, owing to the presence of aliphatic or heteroaliphatic, preferably aliphatic, polycarboxylate linkers in the framework which confer flexibility to the overall structure (as opposed to conventional aromatic type linkers which confer rigidity). The existence of lattice flexibility is a distinctive feature of MOF materials according to the invention. This is generally due to the use of flexible organic ligands (aliphatic or heteroaliphatic, preferably aliphatic, chains), and/or to the shrinkage of the pores linked to the departure of molecules encapsulated within the pores.

The particular structural features of the Zr-, Hf- or Ln-based MOF materials of the present invention, especially in terms of flexibility and pore size, make them adsorbents with a high loading capacity, of high selectivity and high purity.

They thus enable the selective adsorption of molecules with a favorable energy cost and a longer release time, thereby enabling preferential retention of molecules within the MOF pores (those molecules with greater structural and/or chemical affinity with the pore environment).

Due to their structural features, the Zr-, Hf- or Ln-based MOF materials according to the present invention may be used as separation/purification material (e.g., gas separation or small molecule separation, such as for $CO_2/N_2$ separation, separation of chiral molecules, size/shape-based molecule separation, or separation/extraction of metallic ions), or as proton conductive material (fuel cells), or as water sorption material, or as catalyst.

The Zr-, Hf- or Ln-based MOF materials according to the present invention may also be used as water sorption material, in adsorption-type cooling/heating systems, or else in biomass conversion systems/reactions.

The reader may refer to the indicated literature references for guidance as to how the Zr-, Hf- or Ln-based MOFs of the invention may be used in the various applications of interest:

- gas separation or small molecule separation, **[1]**
- $CO_2/N_2$ separation, **[2]**
- separation of chiral molecules, **[3]**
- size/shape-based molecule separation, **[4]**
- separation/extraction of metallic ions, **[5]**
- Fuel-cells (proton conductive materials) **[6]**
- water sorption material, adsorption-type cooling/heating systems **[7, 8]**
- biomass conversion systems/reactions **[9]**

The Zr-, Hf-, Ln-based MOFs described herein may be used in any one or more of the above applications, following conventional means. For example Zr-, Hf-, Ln-based MOFs according to the invention may be used as catalysts, either relying on the catalytic activity of the metal (e.g., Zr), or by loading the MOF with a catalyst, e.g. a material which is simply absorbed into the MOF or which will bind to free functionalities on the organic linkers in the MOF. Catalyst loading and subsequent reagent loading may be performed in conventional fashion. Thus, in another aspect, the invention provides a catalyzed process for reacting a reagent to produce a product, characterized in that as the catalyst or catalyst carrier is used a Zr-, Hf-, Ln-based MOF according to the invention. In another aspect, the invention provides the use of a Zr-, Hf-, Ln-based MOF according to the invention as a catalyst or catalyst support. In yet another aspect, the invention provides a Zr-, Hf-, Ln-based MOF material having catalytic activity. Performance of catalyzed reactions within porous structures is known to allow great reaction specificity and the Zr-, Hf-, Ln-based MOF according to the invention may advantageously be used to this end.

The catalyzed reaction may be biomass conversion reaction. Thus, in another aspect, the invention provides a catalyzed process for biomass conversion to produce a product, characterized in that as the catalyst or catalyst carrier is used a Zr-, Hf-, Ln-based MOF according to the invention wherein the aliphatic or heteroaliphatic, preferably aliphatic, linker L bears an amino group, such as aspartate or glutamate linkers, preferably aspartate linkers (The MOFs materials are used to convert through the $NH_2$ group of aspartic acid or glutamic acid some bioderived molecules into important starting products for fine chemistry). Examples of biomass conversion reactions for which Zr-, Hf-, Ln-based MOF according to the invention may be useful include the conversion of vanillin into 2-methoxy-4-methylphenol, particularly Zr-, Hf-, Ln-based MOFs wherein the aliphatic or heteroaliphatic, preferably aliphatic, linker L bears an amino group, such as aspartate or glutamate linkers.

In a further aspect, the invention provides a process for separating/purifying a product (gas or small molecule) to produce a purified product (gas or small molecule), characterized in that as the separation/purification material is used a Zr-, Hf-, Ln-based MOF according to the invention. For example, the process may be $CO_2/N_2$ separation, a size/shape-based molecule separation process, or a process of separation/extraction of metallic ions.

In yet another aspect, the invention provides a process for enantioselective separation of isomers (e.g. enantiomers or diastereoisomers) to produce a purified isomer or a product enriched in an isomer, characterized in that as the separation material is used a Zr-, Hf-, Ln-based MOF according to the invention with a chiral aliphatic or heteroaliphatic, preferably aliphatic, linker L.

In yet another aspect, the invention provides a cooling/heating method or system for refrigerating machine, characterized in that as the adsorbent material is used a Zr-, Hf-, Ln-based MOF according to the invention. In still another aspect, the invention provides cooling floor-type or cooling ceiling-type air-conditioning systems, implementing the method or comprising the cooling/heating method or system according to the present invention.

The solid Zr-, Hf- and Ln-based MOF materials in accordance with the invention may be prepared under reflux conditions and atmospheric pressure.

Thus, in another aspect, there is provided a process for preparing a crystalline Zr-, Hf- or Ln-based metal-organic framework (MOF) material; said process comprising at least one reaction step (i) of reacting in a suitable solvent system, preferably water or a mixture of water and at least one acid, preferably carboxylic acid, more preferably monocarboxylic:

- at least one metal precursor selected from any Zr, Hf and Ln cluster containing compounds;

- a ligand precursor L' selected from aliphatic or heteroaliphatic, preferably aliphatic, polyfunctionalized compounds comprising two or more -COOH groups and/or functional groups which may yield a -COOH group upon oxidation, such as $-COOR_7$, -CN, -CHO, Me, $-CONR_8R_9$;

    wherein $R_7$, $R_8$ and $R_9$, for each occurrence, independently represent a linear or branched $C_{1-10}$ alkyl, $C_{1-10}$heteroaryl or $C_{6-10}$ aryl moiety; or $R_8$ and $R_9$ together with the nitrogen atom to which they are attached may form a 5- to 6-membered heretocyclic moiety;

wherein each of the foregoing aryl moieties may be, individually, further substituted with one or more linear or branched $C_{1-6}$ alkyl, $C_{1-10}$heteroaryl or $C_{6-10}$ aryl moieties; and wherein each of the foregoing alkyl moieties may preferably be acyclic.

The process may be carried out in a suitable solvent system. Preferably, the solvent system is water or a mixture of water and at least one carboxylic acid. Preferably the carboxylic acid is a monocarboxylic acid. Advantageously, when a mixture of water and at least one acid is used, the acid is preferably an organic acid such as a carboxylic acid. It may be for example a monocarboxylic acid such as formic acid, acetic acid, propionic acid, butyric acid; preferably formic acid or acetic acid; more preferably formic acid.

Advantageously, reaction step (i) may be carried out under reflux of the solvent system, for example 100-120°C, preferably 100-110°C. Advantageously, reaction step (i) may be carried out under reflux of the solvent system and atmospheric pressure.

Advantageously, the metal precursor may be a Zr(IV)-cluster containing compound selected from the following Zr-containing compounds: $ZrCl_4$, $ZrBr_4$, $ZrI_4$, $ZrOCl_2$, $ZrOSO_4$, $ZrO(NO_3)_2$, $Zr(NO_3)_4$, $Zr(OR_4)_4$, wherein $R_4$, for each occurrence, independently represent H, $CO_2$, acyl (e.g., Ac), or a linear or branched $C_{1-10}$ alkyl or $C_{6-10}$aryl moiety; wherein each of the foregoing aryl moieties may be, individually, further substituted with one or more linear or branched $C_{1-6}$ alkyl or $C_{6-10}$ aryl moieties; and wherein each of the foregoing alkyl moieties may preferably be acyclic. Advantageously, the metal precursor may be $ZrCl_4$. Advantageously, the metal precursor is not $Zr(SO_4)_2$.

Advantageously, the metal precursor may be a Hf(IV)-cluster containing compound selected from selected from the following Hf-containing compounds: $HfCl_4$, $HfBr_4$, $HfI_4$, $HfOCl_2$, $HfOSO_4$, $Hf(SO_4)_2$, $HfO(NO_3)_2$, $Hf(NO_3)_4$, $Hf(OR_5)_4$; wherein $R_5$, for each occurrence, independently represent H, $CO_2$, acyl (e.g., Ac), a linear or branched $C_{1-10}$ alkyl or $C_{6-10}$ aryl moiety; wherein each of the foregoing aryl moieties may be, individually, further substituted with one or more linear or branched $C_{1-6}$ alkyl or $C_{6-10}$ aryl moieties; and wherein each of the foregoing alkyl moieties may preferably be acyclic. Advantageously, the metal precursor may be $HfCl_4$.

Advantageously, the metal precursor may be a lanthanide metal cluster containing compound. The Ln metal may be any lanthanide metal, preferably lanthanide metals having a degree of oxidation +3 or +4. For example, the lanthanide metal may be selected from La, Ce, Pr, Nd, , Pm, Sm, Eu, Gd, Tb, Dy, Ho, Er, Tm and Yb. Preferably, the Ln metal may be a lanthanide metal having a degree of oxidation +4, such as Ce, Pr, Nd, Tb and Dy, preferably Ce. Advantageously, the metal precursor may be a Ln(IV) cluster containing compound selected from the following Ln(IV)-containing compounds: $LnCl_4$, $LnBr_4$, $LnI_4$, $LnOCl_2$, $LnOSO_4$, $Ln(SO_4)_2$, $LnO(NO_3)_2$, $Ln(NO_3)_4$, $Ln(OR_6)_4$; wherein $R_6$, for each occurrence, independently represent H, $CO_2$, acyl (e.g., Ac), a linear or branched $C_{1-10}$ alkyl or $C_{6-10}$ aryl moiety; wherein each of the foregoing aryl moieties may be, individually, further substituted with one or more linear or branched $C_{1-6}$ alkyl or $C_{6-10}$ aryl moieties; and wherein each of the foregoing alkyl moieties may preferably be acyclic. Advantageously, Ln may be Ce and the metal precursor may be $CeCl_4$ or $(NH_4)_2Ce(NO_3)_6$, preferably $(NH_4)_2Ce(NO_3)_6$.

In a variant, the Ln metal may be a lanthanide metal having a degree of oxidation +3, such as La, Ce, Pr, Nd, Pm, Sm, Eu, Gd, Tb, Dy, Ho, Er, Tm or Yb. Advantageously, the metal precursor may be a Ln(III) cluster containing compound selected from the following Ln(III)-containing compounds: $LnCl_3$, $LnBr_3$, $LnI_3$, LnOCl, $LnO(NO_3)$, $Ln(NO_3)_3$, $Ln(OR_6)_3$; wherein $R_6$, for each occurrence, independently represent H, $CO_2$, acyl (e.g., Ac), a linear or branched $C_{1-10}$ alkyl or $C_{6-10}$ aryl moiety; wherein each of the foregoing aryl moieties may be, individually, further substituted with one or more linear or branched $C_{1-6}$ alkyl or $C_{6-10}$ aryl moieties; and wherein each of the foregoing alkyl moieties may preferably be acyclic. Ln-based MOFs according to the invention prepared from Ln(III) cluster containing precursors, such as those mentioned above, lead to MOF constructs that are isostructural with the corresponding trivalent Zr- or Hf-based MOFs obtained by suitable reduction of Zr(IV)- or Hf(IV)-based MOFS according to the invention (cf. reduction step (ii) described *infra*).

This leads to the formation of Zr-, Hf- or Ln-based metal-organic framework (MOF) materials having a BET specific surface area < 500 $m^2/g$, preferably <450 $m^2/g$, preferably <400 $m^2/g$, preferably <350 $m^2/g$, preferably <300 $m^2/g$, preferably <250 $m^2/g$, preferably <200 $m^2/g$, preferably <150 $m^2/g$, preferably <100 $m^2/g$. Advantageously, the MOF material may have a BET specific surface area between 50-500 $m^2/g$, preferably between 50-450 $m^2/g$, more preferably between 50-400 $m^2/g$, most preferably between 50-375 $m^2/g$; for example when the MOF material is a Zr-based MOF.

Advantageously, the ligand precursor L' may be an <u>acyclic</u> <u>saturated</u> aliphatic or heteroaliphatic, preferably aliphatic, polycarboxylic acid, or an <u>acyclic</u> <u>saturated</u> aliphatic or heteroaliphatic, preferably aliphatic, compound comprising two or more functional groups which may yield a -COOH group upon oxidation, such as - $COOR_7$, -CN, -CHO, Me, $-CONR_8R_9$; wherein $R_7$, $R_8$ and $R_9$ are as defined above. Preferably, the ligand precursor L' may be an <u>acyclic</u> <u>saturated</u> aliphatic or heteroaliphatic, preferably aliphatic, polycarboxylic acid.

Advantageously, the ligand precursor L' may be an aliphatic or heteroaliphatic, preferably aliphatic, <u>di</u>carboxylic acid or an aliphatic or heteroaliphatic, preferably aliphatic, compound comprising two functional groups which may yield a -COOH group upon oxidation, such as $-COOR_7$, -CN, -CHO, Me, $-CONR_8R_9$; wherein $R_7$, $R_8$ and $R_9$ are as defined

above. Preferably, the ligand precursor L' may be an aliphatic or heteroaliphatic, preferably aliphatic, dicarboxylic acid.

Advantageously, the ligand precursor L' may be a naturally occurring compound, preferably bearing at least two carboxylic groups or carboxylic esters. For example, the ligand precursor L' may be a naturally occurring amino acid, preferably bearing at least two carboxylic groups, such as aspartic acid or glutamic acid.

Advantageously, the ligand precursor L' may be chiral. This may be the case for example of naturally occurring amino acids such as L-aspartic acid and L-glutamic acid.

Advantageously, the ligand precursor L' may have the following structure:

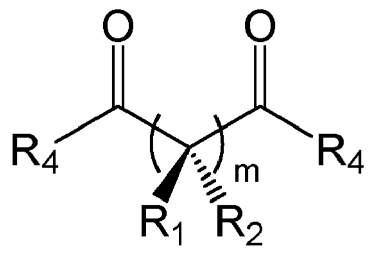

wherein

**m** represents an integer from 1 to 12; and

each occurrence of $\mathbf{R_1}$ and $\mathbf{R_2}$ independently represents H, a halogen atom, -OH, $-OR_A$, $-NH_2$, $-NR_BR_C$, -C(=O)OH, $-C(=O)R_D$, $-SO_3H$, -SH, $-SR_E$, $-P(R_F)_3$; or one occurrence of $R_1$ and $R_2$ taken together with the carbon atom to which they are attached may form a C=O or a $C=C-C(=O)OR_G$ moiety;

wherein $R_A$, $R_B$, $R_C$, $R_D$, and $R_E$, for each occurrence, independently represent a linear or branched $C_{1-10}$ alkyl, $C_{1-10}$heteroaryl or $C_{6-10}$ aryl moiety; $R_F$, for each occurrence, independently represents a $C_{1-10}$heteroaryl or $C_{6-10}$ aryl moiety; and $R_G$, for each occurrence, independently represents H or a linear or branched $C_{1-10}$ alkyl, $C_{1-10}$heteroaryl or $C_{6-10}$ aryl moiety;

wherein each of the foregoing aryl or heteroaryl moieties may be, individually, further substituted with one or more linear or branched $C_{1-6}$ alkyl, $C_{1-10}$heteroaryl or $C_{6-10}$ aryl moieties; and wherein each of the foregoing alkyl moieties may preferably be acyclic; and

each occurrence of $\mathbf{R^4}$ independently represents -OH, -OMo where $M_0$ represents an akali metal cation, a halogen atom, or a $-OR^5$, $-O-C(=O)R^5$ or $-NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may have the following structure:

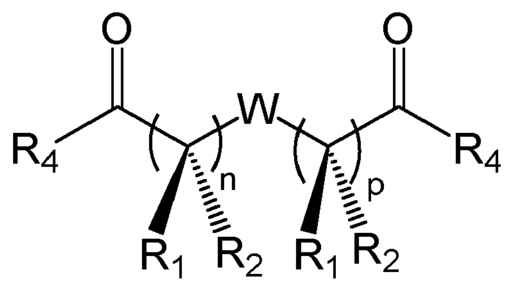

wherein

**W** represents O, S, $NR_{A1}$, Se or $SiR_{B1}R_{C1}$, preferably W represents O, S, or $NR_{A1}$, more preferably O;

wherein $R_{A1}$ represents H or a linear or branched $C_{1-10}$ alkyl, $C_{1-10}$heteroaryl or $C_{6-10}$ aryl moiety; preferably H or a linear or branched $C_{1-6}$ alkyl or a $C_6$ aryl moiety; more preferably H or a linear or branched $C_{1-6}$ alkyl; still more preferably H, methyl, ethyl, *n*-proyl, *i*-propyl, *n*-butyl, *sec*-butyl or tert-butyl; most preferably H, methyl or ethyl;

$R_{B1}$ and $R_{C1}$ independently represent a linear or branched $C_{1-10}$ alkyl, $C_{1-10}$heteroaryl or $C_{6-10}$ aryl moiety; preferably a linear or branched $C_{1-6}$ alkyl or a $C_6$ aryl moiety; more preferably a linear or branched $C_{1-6}$ alkyl;

still more preferably methyl, ethyl, *n*-proyl, *i*-propyl, *n*-butyl, sec-butyl or tert-butyl; most preferably methyl or ethyl;

**n** and **p** independently represent an integer from 1 to 6, preferably 2 to 4; more preferably 2 or 3. Advantageously, n+p ≤10; preferably n+p ≤8; more preferably n+p ≤6; most preferably n+p ≤4; and each occurrence of $\mathbf{R_1}$ and $\mathbf{R_2}$ independently represents H, a halogen atom, -OH, $-OR_A$, $-NH_2$, $-NR_BR_C$, -C(=O)OH, $-C(=O)R_D$, $-SO_3H$, -SH, $-SR_E$, $-P(R_F)_3$; or one occurrence of $R_1$ and $R_2$ taken together with the carbon atom to which they are attached may form a C=O or a $C=C-C(=O)OR_G$ moiety;

wherein $R_A$, $R_B$, $R_C$, $R_D$, and $R_E$, for each occurrence, independently represent a linear or branched $C_{1-10}$ alkyl, $C_{1-10}$heteroaryl or $C_{6-10}$ aryl moiety; $R_F$, for each occurrence, independently represents a $C_{1-10}$heteroaryl or $C_{6-10}$ aryl moiety; and $R_G$, for each occurrence, independently represents H or a linear or branched $C_{1-10}$ alkyl, $C_{1-10}$heteroaryl or $C_{6-10}$ aryl moiety;

wherein each of the foregoing aryl or heteroaryl moieties may be, individually, further substituted with one or more linear or branched $C_{1-6}$ alkyl, $C_{1-10}$heteroaryl or $C_{6-10}$ aryl moieties; and wherein each of the foregoing alkyl moieties may preferably be acyclic; and

each occurrence of $\mathbf{R^4}$ independently represents -OH, -OMo where $M_0$ represents an akali metal cation, a halogen atom, or a $-OR^5$, $-O-C(=O)R^5$ or $-NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may have the following structure:

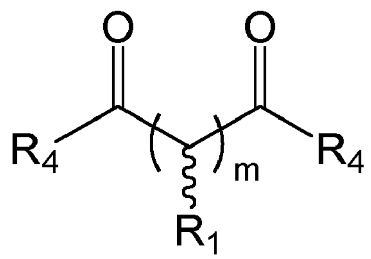

wherein

**m** represents an integer from 1 to 6; and
each occurrence of $\mathbf{R_1}$ independently represents H, a halogen atom, -OH, - $OR_A$, $-NH_2$, $-NR_BR_C$, -C(=O)OH, $-C(=O)R_D$, $-SO_3H$, -SH, $-SR_E$, $-P(R_F)_3$; preferably, each occurrence of $\mathbf{R_1}$ independently represents H, -OH, or $-NH_2$; most preferably one occurrence of $\mathbf{R_1}$ represents H, -OH, or $-NH_2$ and the other occurrences of $\mathbf{R_1}$ represent H; and each occurrence of $\mathbf{R^4}$ independently represents -OH, $-OM_0$ where $M_0$ represents an akali metal cation, a halogen atom, or a $-OR^5$, $-O-C(=O)R^5$ or $-NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may have the following structure:

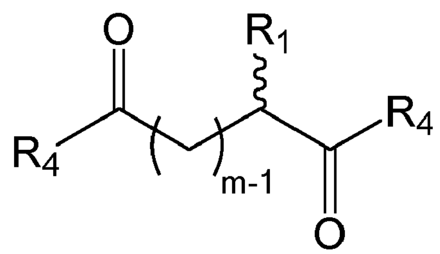

wherein

**m** represents an integer from 2 to 6; and
$\mathbf{R_1}$ represents H, a halogen atom, -OH, $-OR_A$, $-NH_2$, $-NR_BR_C$, -C(=O)OH, - $C(=O)R_D$, $-SO_3H$, -SH, $-SR_E$, $-P(R_F)_3$;

preferably, $\mathbf{R_1}$ represents H, -OH, or-$NH_2$; most preferably $\mathbf{R_1}$ represents-OH, or-$NH_2$; and each occurrence of $\mathbf{R^4}$ independently represents -OH, -OMo where $M_0$ represents an akali metal cation, a halogen atom, or a -$OR^5$, -O-C(=O)$R^5$ or -$NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may have the following structure:

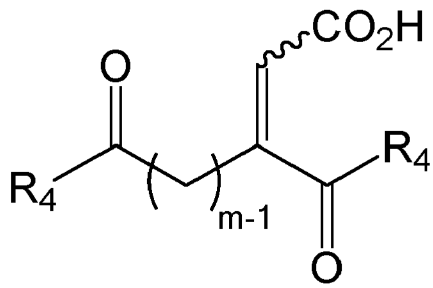

wherein

**m** represents an integer from 2 to 6, preferably 2 to 4; more preferably 2 or 3; and each occurrence of $\mathbf{R^4}$ independently represents -OH, -$OM_0$ where $M_0$ represents an akali metal cation, a halogen atom, or a -$OR^5$, -O-C(=O)$R^5$ or -$NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may have the following structure:

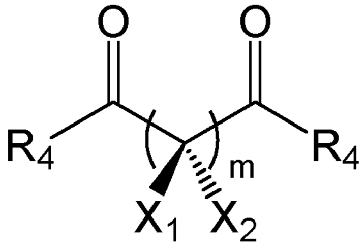

wherein

**m** represents an integer from 1 to 12; preferably 1 to 10; more preferably 1 to 8; each occurrence of $\mathbf{X_1}$ and $\mathbf{X_2}$ independently represents a halogen atom; preferably F; and each occurrence of $\mathbf{R^4}$ independently represents -OH, -OMo where $M_0$ represents an akali metal cation, a halogen atom, or a -$OR^5$, -O-C(=O)$R^5$ or -$NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may have the following structure:

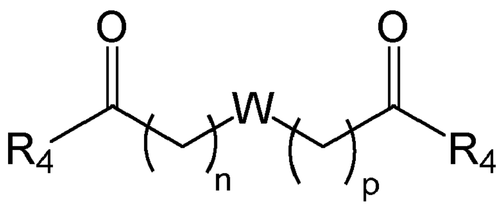

wherein

**W** represents O, S, $NR_{A1}$, Se or $SiR_{B1}R_{C1}$, preferably W represents O, S, or $NR_{A1}$, more preferably O;

wherein $R_{A1}$ represents H or a linear or branched $C_{1-10}$ alkyl, $C_{1-10}$heteroaryl or $C_{6-10}$ aryl moiety; preferably H

or a linear or branched $C_{1-6}$ alkyl or a $C_6$ aryl moiety; more preferably H or a linear or branched $C_{1-6}$ alkyl; still more preferably H, methyl, ethyl, *n*-proyl, *i*-propyl, *n*-butyl, *sec*-butyl or tert-butyl; most preferably H, methyl or ethyl;

$R_{B1}$ and $R_{C1}$ independently represent a linear or branched $C_{1-10}$ alkyl, $C_{1-10}$heteroaryl or $C_{6-10}$ aryl moiety; preferably a linear or branched $C_{1-6}$ alkyl or a $C_6$ aryl moiety; more preferably a linear or branched $C_{1-6}$alkyl; still more preferably methyl, ethyl, *n*-proyl, *i*-propyl, *n*-butyl, *sec*-butyl or tert-butyl; most preferably methyl or ethyl; and

**n** and **p** independently represent an integer from 1 to 6, preferably 2 to 4; more preferably 2 or 3. Advantageously, n+p ≤10; preferably n+p ≤8; more preferably n+p ≤6; most preferably n+p ≤4; and
each occurrence of $\mathbf{R^4}$ independently represents -OH, -OMo where $M_0$ represents an akali metal cation, a halogen atom, or a $-OR^5$, $-O-C(=O)R^5$ or $-NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may have the following structure:

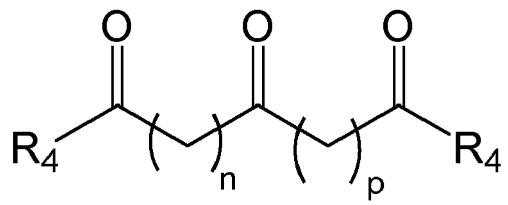

wherein

**n** and **p** independently represent an integer from 1 to 6, preferably 2 to 4; more preferably 2 or 3. Advantageously, n+p ≤10; preferably n+p ≤8; more preferably n+p ≤6; most preferably n+p ≤4; and
each occurrence of $\mathbf{R^4}$ independently represents -OH, -OMo where $M_0$ represents an akali metal cation, a halogen atom, or a $-OR^5$, $-O-C(=O)R^5$ or $-NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may have one of the following structures:

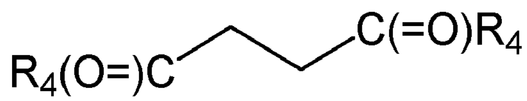

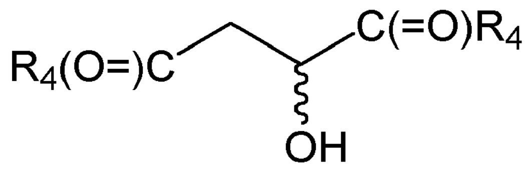

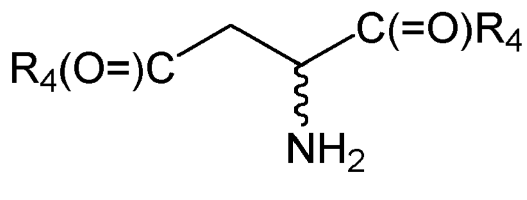

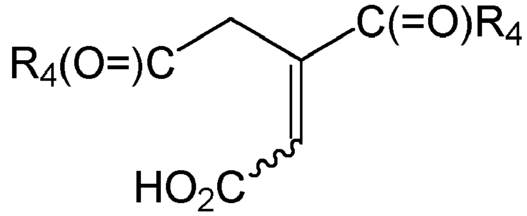

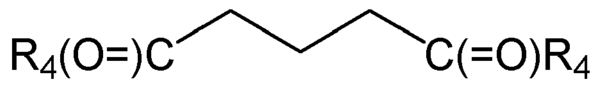

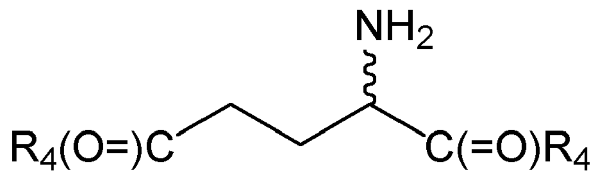

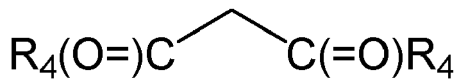

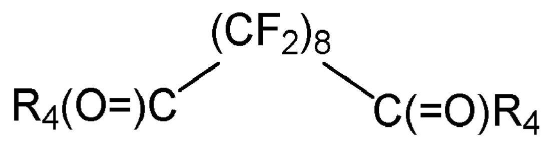

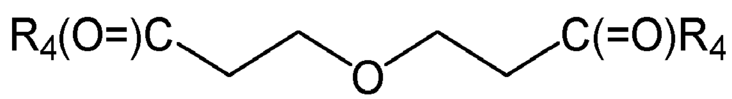

or

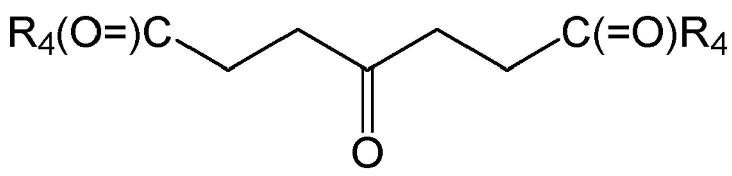

;

wherein each occurrence of **$R^4$** independently represents -OH, -$OM_0$ where $M_0$ represents an akali metal cation, a halogen atom, or a -$OR^5$, -O-C(=O)$R^5$ or -$NR^5R^{5'}$ moiety, wherein $R^5$ and $R^{5'}$ independently represent $C_{1-12}$alkyl; preferably each occurrence of $R^4$ represents OH.

Advantageously, the ligand precursor L' may be chiral and may have one of the following structures:

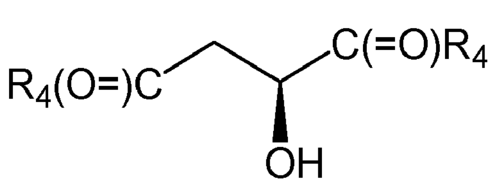

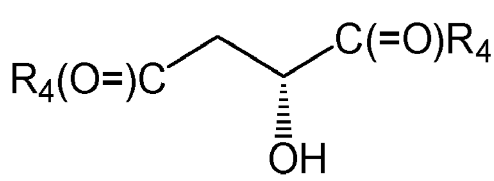

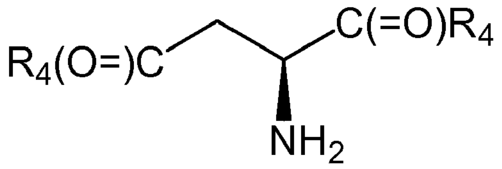

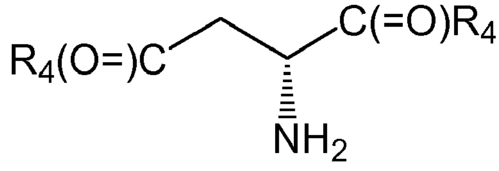

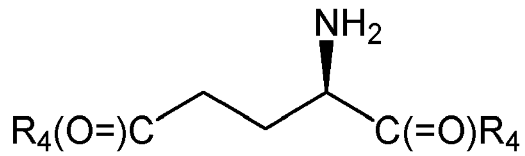

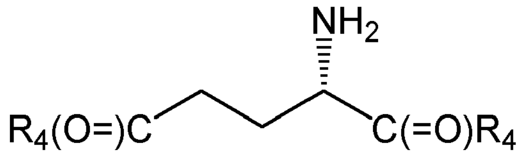

wherein each occurrence of $\mathbf{R^4}$ independently represents -OH, -$OM_0$ where $M_0$ represents an akali metal cation, a halogen atom, or a -$OR^5$, -O-C(=O)$R^5$ or - $NR^5R^{5'}$ moiety, wherein $R^5$ and $R^{5'}$ independently represent $C_{1-12}$alkyl; preferably each occurrence of $R^4$ represents OH. Preferably, the linker precursor L' may be L-aspartatic acid or L-glutamic acid.

A mixture of linker precursors L' may be used to introduce different functional groups within the pore space, e.g. by using L-glutamic acid to provide free amine groups or by using a shorter linker such as succinic acid. This introduction of functionalised linkers is facilitated since the Zr-, Hf-, Ln-MOFs have excess inorganic cornerstone coordination sites beyond those required to form the stable 3D MOF structure.

In a **variant A,** in any one of the process variants described above, step (i) may be carried out under $1.10^5$ Pa (ambient pressure conditions) by first mixing the ligand precursor L' in $H_2O$, optionally in the presence of a carboxylic acid, such as formic acid or acetic acid; then adding the metal precursor selected from $ZrCl_4$, $ZrOCl_2$, $ZrOSO_4$, $ZrO(NO_3)_2$, $Zr(NO_3)_4$, $Zr(OR_4)_4$, $HfCl_4$, $HfOCl_2$, $HfOSO_4$, $Hf(SO_4)_2$, $HfO(NO_3)_2$, $Hf(NO_3)_4$, $Hf(OR_5)_4$, $LnCl_4$, $LnOCl_2$, $LnOSO_4$, $Ln(SO_4)_2$, $LnO(NO_3)_2$, $Ln(NO_3)_4$, or $Ln(OR_6)_4$ ; portion-wise (in several batches); followed by vigorous stirring and heating at the boiling temperature of the mixture (reflux) for a suitable amount of time. Preferably the metal precursor is $ZrCl_4$, $HfCl_4$ or $LnCl_4$; preferably $ZrCl_4$, $HfCl_4$ or $CeCl_4$; more preferably $ZrCl_4$. When the metal precursor is in liquid form, it may be added dropwise. When the metal precursor is in solid form, it may be added stepwise in several consecutive batches.

In another **variant B,** in any one of the process variants described above, step (i) may be carried out under $1.10^5$ Pa (ambient pressure conditions) by successively adding in $H_2O$ the ligand precursor L', the metal precursor selected from $ZrCl_4$, $ZrOCl_2$, $ZrOSO_4$, $ZrO(NO_3)_2$, $Zr(NO_3)_4$, $Zr(OR_4)_4$, $HfCl_4$, $HfOCl_2$, $HfOSO_4$, $Hf(SO_4)_2$, $HfO(NO_3)_2$, $Hf(NO_3)_4$, $Hf(OR_5)_4$, $LnCl_4$, $LnOCl_2$, $LnOSO_4$, $Ln(SO_4)_2$, $LnO(NO_3)_2$, $Ln(NO_3)_4$, or $Ln(OR_6)_4$ ; and then optionally a carboxylic acid such as formic acid or acetic acid, at 25°C $\pm$ 3°C; followed by heating at the boiling temperature of the mixture (reflux) for a suitable amount of time. Preferably the metal precursor is $ZrCl_4$, $HfCl_4$ or $LnCl_4$; more preferably $ZrCl_4$.

In yet another **variant C,** in any one of the process variants described above, step (i) may be carried out under $1.10^5$ Pa (ambient pressure conditions) by successively adding in $H_2O$ the ligand precursor L', the metal precursor selected from $ZrCl_4$, $ZrOCl_2$, $ZrOSO_4$, $ZrO(NO_3)_2$, $Zr(NO_3)_4$, $Zr(OR_4)_4$, $HfCl_4$, $HfOCl_2$, $HfOSO_4$, $Hf(SO_4)_2$, $HfO(NO_3)_2$, $Hf(NO_3)_4$, $Hf(OR_5)_4$, $LnCl_4$, $LnOCl_2$, $LnOSO_4$, $Ln(SO_4)_2$, $LnO(NO_3)_2$, $Ln(NO_3)_4$, or $Ln(OR_6)_4$ ; and then optionally a carboxylic acid such as formic acid or acetic acid; and let the reaction proceed at a temperature ranging between 25°C $\pm$ 3°C (room temperature) and the boiling temperature of the mixture (reflux) for a suitable amount of time. Preferably the metal precursor is $ZrCl_4$, $HfCl_4$ or $LnCl_4$; more preferably $ZrCl_4$.

Advantageously, in any one of the process variants described above, within the reaction mixture, the molar ratio metal precursor/ ligand precursor L' may preferably vary from about 1.0 to 4.0 approximately and more preferably from about 1.5 to 2.5. Advantageously, both the metal precursor and the linker precursor L' are soluble or dispersible in the solvent system of the reaction, preferably there are both soluble.

Advantageously, in any one of the process variants described above, reaction step (i) may be carried out at high concentrations. The metal precursor may be present in the reaction solution at a concentration of 0.2-3.0 M, especially 0.5-2.0 M.

MOF formation may be allowed to occur under static conditions, or under stirring conditions. The reaction need not be carried out under oxygen-free atmosphere. It is one of the advantages of the invention: MOFs of the invention may be prepared in water or aqueous solvent mixture under ambient atmosphere.

Advantageously, in any one of the process variants A, B or C described above, the duration of the heating step will vary as a function of the temperature used, it being understood that the higher the temperature, the shorter this duration is. Preferably, the duration of the heating step in process variants A, B or C may vary from 30 minutes to 100 hours approximately, preferably from 30 minutes to 72 hours, more preferably from 1 hour to 36 hours, yet more preferably from 1 hour to 24 hours, most preferably about 24 hours.

Advantageously, the process may comprise a further step of isolating the resulting Zr-, Hf- or Ln-based inorganic-organic hybrid solid material obtained from step (i), and reacting it with HCl, $H_2SO_4$, $H_3PO_4$, $R^3$-$SO_3H$, or $R^3$-$PO_3H_2$, wherein $R^3$, for each occurrence, independently represent OH, $C_{1-12}$alkyl, $C_{1-12}$heteroalkyl, $C_{6-10}$aryl, $C_{5-10}$heteroaryl; where each of the foregoing alkyl and heteroalkyl moiety may be linear or branched and cyclic or acyclic. This step advantageously leads to the exchange of formate/acetate ligands (A) that may be pesent within the MOF framework, with OH/$H_2O$ ligands. It may alternatively be effected by thermal treatment, as described infra.

Formate/acetate ligands (A) may be removed thermally under vacuum (below 200°C, for example a temperature ranging from 20 to 200°C, preferably from 50 to 150°C) and the resulting material may then be exposed to air moisture at a temperature below 100°C, for example from 20 to 100°C, or room temperature (25°C $\pm$ 3°C). This alternative process effectively results in the replacement of the formate/acetate ligands by OH/$H_2O$ ligands.

In yet another variant, formate/acetate ligands (A) may be removed thermally under vacuum (below 200°C, for example a temperature ranging from 20 to 200°C, preferably from 50 to 150°C) and the resulting material may then be exposed to a vaporized organic compound at temperature below its boiling temperature, for example room temperature (25°C $\pm$ 3°C). Preferably, the organic compound contains at least one polar functional group such as amines, carboxylic groups, phenols.... This alternative process effectively results in the replacement of the formate/acetate ligands by other polar organic ligands.

In yet another alternative, post-synthetic functionalization may be effected, through a solvothermal treatment, by post-synthetically grafting other molecules having a polar group (e.g. amines, carboxylic groups, phenols...) on the metal sites of the Zr-, Hf- or Ln-based inorganic-organic hybrid solid material composed of a three-dimensional succession of building units of formula ($I_0$), wherein A represents a $Cl^-$ , $HCO_2^-$ or $MeCO_2^-$; directly through the replacement of the chloride, formate or acetate ligands. In these cases, one might not need to use large excesses of the molecules to be anchored but more likely stoichiometric excesses. For example, the reader may refer to the work by Serre et al. with MIL-101(Cr), **[10]** and adapt the methods described therein to effect similar post-synthetic graft with the Zr-, Hf- or Ln-based MOFs according to the present invention.

In a variant, the process may comprise a further step (ii) of reducing the Zr(IV) or Hf(IV) metal centers in the Zr-, Hf- or Ln-based inorganic-organic hybrid solid material obtained from step (i), according to a known method **[13],** whereby Zr(IV) or Hf(IV) metal centers are reduced to the corresponding Zr(III) or Hf(III), respectively. This step advantageously leads to the formation of trivalent Zr- or Hf-based MOFs.

Advantageously, in any one of the process variants A, B or C described above, prior to adding the metal precursor, another metallic inorganic precursor in the form of a metal $M_1$, a salt of a metal $M_1$ of formula (IV) or a hydroxide or oxide of a metal $M_1$, is added to the reaction mixture;

$$M_1Y_p.nH_2O \qquad \textbf{(IV)}$$

wherein $M_1$ is a metal selected from Cu, Fe, Co, Ni, Mn, V, Cr, Ru, Sn or Nb; and Y represents $Cl^-$, $NO_3^-$, $SO_4^{2-}$, $AcO^-$, or

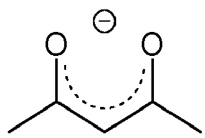
;

preferably the other metallic inorganic precursor is in the form of a salt of $Cu^{2+}$, $Fe^{2+}$, $Fe^{3+}$, $Co^{2+}$, $Co^{3+}$, $Ni^{2+}$, $Mn^{2+}$, $Mn^{3+}$, $Mn^{4+}$, $V^{3+}$, $V^{4+}$, $Cr^{3+}$, $Ru^{3+}$, $Ru^{4+}$, $Sn^{4+}$, $Nb^{4+}$ or $Nb^{5+}$; most preferably the other metallic inorganic precursor is a metal salt such as $RuCl_3$, $VCl_3$, $SnCl_4$, $CrCl_3$ or $FeCl_3$.

Alternatively, metal doping may be effected post-synthetically by replacing a subset of the Zr, Hf or Ln metal centers in the Zr-, Hf- or Ln-based MOF materials of the invention with other metal ions, such as Sn(IV), Nb(V) and Nb(IV). For example, the reader may refer to the work by Cohen et al. **[11]** and adapt the methods described therein to effect similar post-synthetic metal doping with the Zr-, Hf- or Ln-based MOFs according to the present invention.

As such, metal ions such as $Cu^{2+}$, $Fe^{2+}$, $Fe^{3+}$, $Co^{2+}$, $Co^{3+}$, $Ni^{2+}$, $Mn^{2+}$, $Mn^{3+}$, $Mn^{4+}$, $V^{3+}$, $V^{4+}$, $Cr^{3+}$, $Ru^{3+}$, $Ru^{4+}$, $Sn^{4+}$, $Nb^{4+}$ or $Nb^{5+}$, may be incorporated into the material's structure in place of Zr, Hf or Ln metal centers.

The metal doping ratio may be adjusted by using different amounts of starting metal salt to prepare the Zr-, Hf- or Ln-based material according to the invention (see infra). As such, the % doping is tunable and may range from 1% to 20% of the aforementioned metal centers. Generally, the doped Zr-, Hf- or Ln-based material may have the same crystal structure as the pure Zr-, Hf- or Ln-based material (no doping). However, they may be slight differences in unit cell parameters.

In any one of the process variants described above, the resulting solid material may be isolated by any separation method known to a person skilled in the art, among which filtration is preferred, optionally under reduced pressure.

In any one of the process variants described above, when the synthesis is complete, the solid material may be washed, either very rapidly statically, or by redispersion in a solvent at ambient temperature (25°C ± 3°C) with stirring, for example with an organic solvent such as DMF or ethanol, then dried by any appropriate drying technique known to a person skilled in the art. This drying step makes it possible to eliminate any trace of solvent. For example, it may be carried out by calcination of the solid material in air or under vacuum, at a temperature of 100 to 200° C for 3 to 48 hours, preferably of 10 to 15 hours.

The surface area can be determined by use of nitrogen adsorption and the BET method. This method, by which the surface areas referred to herein may be determined, is described in the Examples or by Rouquerol et al in "Adsorption by powders and porous solids", Academic Press, San Diego, California, USA, 1999. **[12]**

The flexible Zr-, Hf, Ln-based MOFs according to the invention, built from aliphatic or heteroaliphatic, preferably aliphatic, linkers, especially naturally occurring dicarboxylic acids with saturated alkyl chains, could provide a solution to the severe drawbacks mentioned in the introductory part of this document.

Specifically, aliphatic and heteroaliphatic dicarboxylic acids generally possess much better solubility in green solvents (water, EtOH, etc.), thereby efficiently avoiding the involvement of toxic organic solvents conventionally used in MOF preparations.

In addition, the natural flexibility of the linkers' saturated aliphatic or heteroaliphatic chain provides more readily access to dynamic small pores with contracted size and shape compared to the rigid conjugated aromatic MOF counterparts. This flexibility conferred to the MOF lattice is an invaluable property for molecule separation applications, without complicated pre- or post-functionalization as in the case of existing rigid linker MOFs.

Aliphatic/heteroaliphatic, preferably aliphatic, Zr-, Hf- and Ln-based MOFs according to the invention also advantagesouly have very small nanoparticle size (10-20 nm). Therefore, they prove very useful to form highly dispered transparent gel-like suspensions. As such, aliphatic/heteroaliphatic, preferably aliphatic, Zr-, Hf- and Ln-based MOFs according to the invention also find use in applications such as making uniform mixed matrix MOF membranes, making composites for cosmetic products (suncream). In addition, because Zr-, Hf- and Ln-based MOFs according to the invention may be prepared under high reaction concentration, they may readily lead to the formation of MOF gels.

As a whole the Zr-, Hf-, Ln-based MOF materials according to the present invention possess several unique chemical and structural features as summarized below:

- Green solvent, reflux reaction condition, easy to scale-up
- Small BET specific surface area compared to other Zr-, Hf-, Ln-MOFs, especially Zr-MOFs, known in the art
- Flexible scaffold due to the presence of aliphatic or heteroaliphatic, preferably aliphatic, ligands in the MOF framework.
- Small dynamic pore size
- Small particle size (in the nanometer range)

Other advantages may also emerge to those skilled in the art upon reading the examples below, with reference to the attached figures, which are provided as nonlimiting illustrations.

## EQUIVALENTS

The representative examples that follow are intended to help illustrate the invention, and are not intended to, nor should they be constructed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. It should further be appreciated that the contents of those cited references are incorporated herein by reference to help illustrate the state of the art.

The following examples contain important additional information, exemplification and guidance that can be adapted to the practice of this invention in its various embodiments and the equivalents thereof.

## EXAMPLES

The Zr-, Ln- and Hf-based materials according to the present invention and their preparation can be understood further by the examples that illustrate some of the processes by which these conjugates are prepared or used. It will be appreciated, however, that these examples should not be construed to limit the invention. Variations of the invention, now known or further developed, are considered to fall within the scope of the present invention as described herein and as hereinafter claimed.

**Exemplary general protocol:**

The organic linker was transferred into a reactor equipped with a condensing apparatus, water was added to dissolve or disperse the linker thereby forming a uniform solution or dispersion. The metal precursor (e.g., Zr(IV)) was added into the reaction mixture followed by heating the reaction system at an appropriate temperature for a suitable duration. The resulting product was collected by filtration or centrifugation.

**Example 1: synthesis of Zr-aspartic-I MOF**

L-aspartic acid (1.4 g) was transferred into a 25/50 mL round bottom flask, 5 mL of water was added to disperse the linker. $ZrCl_4$ (1.15 g) was added portionwise into the water suspension, leading to a clear colorless solution. Another 5 mL of water was added to flush the inner face of the flask, trying to wash as much as possible the $ZrCl_4$ powder down into the solution. The reaction was kept at reflux for 24 hours (110 °C). The reaction is very fast: after refluxing for less one hour, already large amounts of white product precipitated.

**Example 2: synthesis of Zr-succinic MOF**

Succinic acid (1.2 g) was transferred into a 25/50 mL round bottom flask, 5 mL of water was added to disperse the linker. $ZrCl_4$ (1.15 g) was added portionwise into the water suspension, leading to a clear colorless solution. Another 5 mL of water was added to flush the inner face of the flask, to try to wash as much as possible the $ZrCl_4$ powder down into the solution. The reaction was kept at reflux for 24 hours (110 °C).

**Example 3: synthesis of Zr-aspartic-II MOF**

L-aspartic acid (1.4 g) was transferred into a 25/50 mL round bottom flask, 5 mL of water was added to disperse the linker. $ZrCl_4$ (1.15 g) was added portionwise into the water suspension, leading to a clear colorless solution. 2.5 mL of water and 2.5 mL of formic acid were added to flush the inner face of the flask, to try to wash as much as possible the $ZrCl_4$ powder down into the solution. The reaction was first kept at 85 °C for 48 hours and it is still clear colorless solution at this step. And then the temperature was increased to 110 °C. White product precipitated in less one hour. Much better crystalline product could be obtained following the same temperature ramping but without stirring all the time.

**Example 4: synthesis of Zr-malic MOF**

L-malic acid (1.4 g) was transferred into a 25/50 mL round bottom flask, 5 mL of water was added to disperse the linker. $ZrCl_4$ (1.15 g) was added portionwise into the water suspension, leading to a clear colorless solution. Another 5 mL of water was added to flush the inner face of the flask, to try to wash as much as possible the $ZrCl_4$ powder down into the solution. The reaction was kept at reflux for 24 hours (110 °C).

**Example 5: synthesis of Zr-glutamic-I MOF**

L- glutamic acid (3.0 g) was transferred into a 25/50 mL round bottom flask, 5 mL of water was added to disperse the linker. $ZrCl_4$ (2.3 g) was added portionwise into the water suspension, leading to a clear colorless solution. Another 5 mL of water was added to flush the inner face of the flask, to try to wash as much as possible the $ZrCl_4$ powder down into the solution. The reaction was kept at reflux for 24 hours (110 °C).

**Example 6: synthesis of Hf-Aspartic MOF**

L-aspartic acid (1.4 g) was transferred into a 25 mL round bottom flask, 5 mL of water was added to disperse the linker. $HfCl_4$ (1.6 g) was added by portion into the water suspension, leading to a clear colorless solution. Another 5 mL of water was added to flush the inner face of the flask, to try to wash as much as possible the $HfCl_4$ powder down into the solution. The reaction was kept at reflux for 24 hours (110 °C). The resulting product was collected either by filtration or centrifuge.

**Example 7: synthesis of Ce(IV)-Aspartic MOF**

L-aspartic acid (0.7 g) was transferred into a 10 mL round bottom flask, 2.5 mL of water was added to disperse the linker. $(NH_4)_2Ce(NO_3)_6$ (1.6 g) was added by portion into the water suspension, leading to bright orange suspension. Another 2.5 mL of water was added to flush the inner face of the flask, try to wash as much as possible the inorganic

salt down into the reaction mixture. The reaction was kept at reflux for 24 hours (110 °C). The resulting product was collected either by filtration or centrifuge.

**Example 8: other linkers**

Examples 1-7 were repeated using the following additional linkers: aconitic acid, glutaric acid, glutamic acid, malonic acid and perfluorosuberic acid to yield the correspondinf MOFs in good yield.

**Example 9: Crystal structure characterization**

Crystal structures of Zr-, Hf- and Ln-based MOFs according to the invention can be solved with high resolution powder X-ray diffraction data assisted by DFT calculation.

All the crystal structures of the MOF prepared in Examples 1-8 were determined by either single crystal synchrotron data/high resolution powder X-ray diffraction data or computational simulation.

Product samples were grinded into fine powder and sealed in glass capillaries with inner diameters of 0.3 mm or 0.7 mm. PXRD patterns were collected on a Bruker D8 diffractometer at room temperature for 72 hours in a $2\theta$ range from 3-90 ° (step size of 0.01 °).

When pure water was used as the solvent, the isostructures of the reported Zr-Fum compound (MOF-801) were generally observed, in which 12-connected $Zr_6O_4(OH)_4$ cluster secondary building units (SBUs) are interlinked by six dicarboxylic acid molecules to form the 3D frameworks no matter what kind of linker was involved (cf. Figure 1, Zr-Asa-I from Example 1). By adjusting the solvent mixture with different modulating chemicals (formic acid, acetic acid, HCl, etc.), the other new types of structures could be obtained successfully consisted of $Zr_6O_4(OH)_4$ cluster SBUs with lower connectivity, such as 10-connected, 8-connected and even 6-connected. The terminal positions on the $Zr_6O_4(OH)_4$ cluster are usually occupied by formate, acetate or hydroxyl groups. Formate and acetate sometimes act like the secondary ligand to help the fabrication of the 3D framework (cf. Figure 2, Zr-malic MOF from Example 4).

The comparison of PXRD patterns for Zr-Asa-I, Hf-Asa-I and Ce-Asa-I shown in Figure 3 confirmed the isostructural features of these MOFs, meaning that Hf(IV) and Ce(IV) ions could successfully function like Zr(IV) in the same reaction condition.

**Example 10: Characterization**

a) Thermal stability

Thermogravimetric analyses were carried out with a Mettler Toledo TGA/DSC 1,

STAR System apparatus under an $O_2$ flow of 50 mL/min, at a heating rate of 3 °C/min to 600 °C.

b) Temperature-dependent X-ray powder diffraction

X-ray temperature dependent diffraction experiment was performed on a Bruker-D8 Advance diffractometer equipped with a HTK-1200N (Anton Parr) high-temperature chamber furnace and a LYNXEYE XE detector (with Cu-$K\alpha$ radiation). PXRD patterns were collected every 25 °C from room temperature to 500 °C.

c) Scanning electron microscopy (SEM)

SEM images were taken with a JEOL JSM-7001F microscope using gold coated samples. MOF products have good size and shape distributions. It is noteworthy that the sizes of some MOF products illustrated herein are already in nano-material scale which is really helpful for following applications in different aspects.

d) Nitrogen Porosimetry

Nitrogen adsorption measurements were performed with a BEL Japan Belsorp Mini apparatus at 77 K after the sample being fully activated (BEL Japan, BELSORP Prep). The MOF samples were directly activated at room temperature (25 °C in general) for 20 hours under vacuum before the nitrogen adsorption at 77K was carried out. The Brunauer-Emmett-Teller (BET) surface area, Langmuir surface area and total pore volume ($p/p_0$ = 0.990) of the samples were calculated to be below 500 $m^2/g$.

e) Chemical stability tests

The MOFs illustrated herein have excellent stability in water, acidic conditions at room temperature. After soaking the MOF solid of Examples 1-6 in the above chemicals for a least one week, there was no notable difference in their PXRD patterns observed. The compound also shows good tolerance in basic aqueous condition, such as $NaOH/NaHCO_3$ buffer with pH = 10. The crystallinity of the MOF was mostly kept after five days. Furthermore, when the MOF compound of Examples 1-6 was refluxed in boiling water it showed considerable resistance and could resist to degradation for more than 24 hours, suggesting acceptable hydrothermal stability.

Conclusions:

- ✧ PXRD data support that all the flexible aliphatic Zr-MOFs illustrated herein are highly crystalline compounds. Some of them are single crystals with a size around 5-100 μm.

- ✧ TGA and temperature dependent PXRD measurement indicated that the flexible aliphatic Zr-MOFs illustrated herein showed limited thermal stability, majorly due to the thermal resistance nature of the saturated aliphatic chains.

- ✧ Nitrogen sorption measurement provides solid evidence that the flexible aliphatic Zr-MOFs illustrated herein have dynamic smaller pore with a surface area less than 500 $m^2/g$.

- ✧ Chemical stability test under wide range of conditions evidenced that the flexible aliphatic Zr-MOFs illustrated herein possess good to excellent hydrothermal stability. Some of them show good tolerance towards acidic conditions like the other reported rigid Zr-MOFs.

**Example 11: properties/applications**

**a) ion extraction/separation:**

Ion extraction/separation in aqueous solution is of essential importance in water purification, semiconductor industry, pharmaceutical and nuclear waste detoxification. The material candidate for this particular application should be water stable with good capacity, selectivity and recyclability.

The flexible aliphatic or heteroaliphatic, preferably aliphatic, MOFs according to the invention may be tested according to any one of the following protocols.

Protocol 1

Absorbing $ReO_4^-$ as a model experiment to illustrate the possible application of flexible aliphatic or heteroaliphatic, preferably aliphatic, Zr-, Hf-, Ln-based MOFs according to the invention on the detoxification of nuclear waste. $NaReO_4$ standard solution (also termed as $ReO_4^-$ standard solution) was used for all single component ion-exchange by applying a batch method in air at room temperature. In detail, stoichiometric amount of Zr-Asa-I product was added to 10 ml of $ReO_4^-$ solution in a glass vial (23 mL) and left in the hood undisturbed for one day. The solution was then filtered through a syringe filter (0.2 μm),diluted with distilled water to a suitable concentration and then subject to ICP study. For the time dependent experiment, several parallel solutions were prepared. The same process was carried out on each solution according to the required extraction duration.

Protocol 2

Absorbing methyl orange (MO) as a model experiment to illustrate the possible application of flexible aliphatic or heteroaliphatic, preferably aliphatic, Zr-, Hf-, Ln-based MOFs according to the invention on the purification of dye-polluted industrial waste water. MO aqueous solution (10 ppm) was prepared. Zr-Asa-I MOF product (10 mg) was added into the aforementioned MO solution (10 mL) in a glass vial (23 mL) and the mixture was left in the hood undisturbed for a suitable duration. Afterwards, the MOF solid was collected by centrifuge while the solution was subject to UV-Vis measurement in order to determine the remained dye concentration in the solution after absorbing process.

**b) Recognition and separation of chiral molecules**

The involvement of naturally occurring amino acids, such as L-aspartic acid and L-glutamic acid, as linkers to construct flexible aliphatic or heteroaliphatic, preferably aliphatic, Zr-, Hf-, Ln-based MOFs according to the invention allows the possibility of enantioselective recognition and separation of chiral molecule from their corresponding racemic mixture by using the homochiral pore environment and interaction in the Zr-, Hf-, Ln-based MOF structure. One example (enantioselective separation of 2-pentanol with Zr-Asa-I MOF) in detail is shown here to illustrate the general procedure for this application.

1) separation in solution: 100 mg of activated Zr-Asa-I MOF solid (washed with EtOH and air dry afterwards) was soaked in racemic 2-pentanol mixture solution in EtOH/water = 75/25 (20 mL) with a concentration of 50 $\mu$g/mL. Enantioselective separation process was monitored with HPLC measurement along time.

**2)** Solid phase extraction based enantioselective separation: the first step of testing the separation ability of the MOF material could be carried out by using the pure activated MOF particles. Packing MOF particles into a column with suitable diameter is preferred after the sieving process (picking up MOF particles with a size in a required range). Further steps of test involve packing separation column with shaped MOF materials, in which required shape and size of the final solid were achieved by mixing MOF particles with a suitable binder chemical via a certain procedure (such as 10 wt.% sucrose/$H_2O$ mixture). Afterwards, the racemic mixture of a selected molecule in solution (hexane etc.) was passed the MOF column by pressure. The final product solution was collected and subject to HPLC analysis.

**c) Size and shape dependent separation of organic molecules**

All the organic linkers making up the Zr-, Hf-, Ln-based MOFs according to the invention and described in the present document have an aliphatic or heteroaliphatic, preferably aliphatic, chain as the main moiety. The corresponding Zr-, Hf-, Ln-based MOFs thus possess flexibility (shape selectivity) and limited pore diameter (size selectivity), which makes the pore size and shape dependent separation of organic molecules become a possible application.

Being similar with the protocol for enantioselective separation, the size and shape dependent separation could be carried out in both solution and solid phase extraction with a MOF column (the column containing a Zr-, Hf-, Ln-based MOF according to the invention). For example, a solution mixture of n-butanol and ter-butanol with a certain ratio could be separated using a Zr-, Hf-, Ln-based MOF column to give rise to only n-butanol in the final separated product.

**d) Water-assisted proton conductivity measurement**

AC impedance analysis was carried out using a Broadband Dielectric Spectrometer, Novocontrol alpha analyzer over a frequency range of 1 - $10^6$ Hz and with an applied ac voltage of 20 mV. The sample powder was introduced in a *homemade* cell and placed into an Espec Corp. SH-221 incubator to control the temperature (298 < T (K) < 363) and the Relative Humidity (RH = 95%). The conductivity ($\sigma$) was evaluated considering $\sigma = \frac{1}{R} \times \frac{l}{S}$, where R, I and S are the resistance, the sample thickness and the sample surface, respectively. For example, Zr-Asa-I MOF shows a high proton conductivity value of 1.1 x $10^{-2}$ S.cm$^{-1}$ at 90°C and 95% RH. In addition, its water stability is supported by the retention of both the structure (evidenced by pxrd comparison before and after the measurement) and the conductivity performances over one week. Similarly, Zr-Glutamic-I MOF displays very high proton conductivity of 1.5 x $10^{-2}$ S.cm$^{-1}$ at 90°C and 95% RH.

**e) $CO_2/N_2$ separation based on Zr-Asa-I MOF structure**

Based on the DFT optimized structure model of Zr-Asa-I MOF, Grand Canonical Monte Carlo simulations revealed that at 303 K $CO_2$ adsorb much more than $N_2$, the uptake for this latter molecule being even negligible. A detailed analysis of the configurations indicated that $CO_2$ molecules are primarily distributed in the regions close to the $NH_3^+$ functional groups, while $N_2$ molecules do not show any specific interactions with the pore walls. The adsorption enthalpies for $CO_2$ and $N_2$ molecules at 303 K calculated from the GCMC configuration at low-pressure are - 55 kJ/mol and -20 kJ/mol, respectively. Such a scenario also holds true for the gas mixture (gas mixture $CO_2$:$N_2$ = 15:85) as depicted in Figures 4 and 5. The corresponding $CO_2/N_2$ selectivity at 1 bar - the typical industrial concentration and pressure conditions for the separation of flue gas emitted from the power plants, has been predicted to be almost infinite.

While we have described a number of embodiments of this invention, it is apparent that our basic examples

may be altered to provide other embodiments that utilize the Zr-, Hf-, Ln-based MOFs and methods of this invention. Therefore, it will be appreciated that the scope of this invention is to be defined by the appended claims rather than by the specific embodiments that have been represented by way of example.

## LIST OF REFERENCES

**[1]** US 9,662,632
**[2]** CN 103464001
**[3]** CN103331151
**[4]** Commensurate Adsorption of Hydrocarbons and Alcohols in Microporous Metal Organic Frameworks, Chemical Reviews, 2012, 112, 836-868.
**[5]** Ionic metal-organic frameworks (iMOFs): Design principles and applications, Coordination Chemistry Reviews, 2016, 307, 313-341.
**[6]**

a) Ha L. Nguyen, Felipe Gándara, Hiroyasu Furukawa, Tan L. H. Doan, Kyle E. Cordova, and Omar M. Yaghi, J. Am. Chem. Soc. 2016, 138, 4330-4333;
b) Valentina G. Ponomareva, Konstantin A. Kovalenko, Alexei P. Chupakhin, Danil N. Dybtsev, Elena S. Shutova, and Vladimir P. Fedin, J. Am. Chem. Soc. 2012, 134, 15640-15643.

**[7]** EP2230288
**[8]** EP2049549
**[9]** Herbst et al., "MOF catalysts in biomass upgrading towards value-added fine chemicals" Cryst. Eng. Comm., 2017, 19, 4092-4117.
**[10]** Y. K. Hwang, D.-Y. Hong, J. S. Chang, S. H. Jhung, Y.-K. Seo, J. Kim, A. Vimont, M. Daturi, C. Serre, and G. Férey, Angew. Chem. Int. Ed, 47, 2008, 4144.
**[11]** 1) Y. Lee, S. Kim, J. K. Kang, S. M. Cohen, Chem. Commun., 2015, 51, 5735; 2) M. Kim, J. F. Cahill, H. Fei, K. A. Prather, S. M. Cohen, J. Am. Chem. Soc. 2012, 134, 18082-18088.
**[12]** Rouquerol et al in "Adsorption by powders and porous solids", Academic Press, San Diego, California, USA, 1999.
**[13]** Wenbin Lin, J. Am. Chem. Soc., 2017,139, 15600-15603.


## Claims

1. A Zr-, Hf- or Ln-based metal-organic framework (MOF) material wherein the Zr, Hf or Ln atoms throughout the MOF framework are connected with aliphatic or heteroaliphatic, preferably aliphatic, polycarboxylate linkers L; wherein the carboxylate groups in the linkers' aliphatic or heteroaliphatic, preferably aliphatic, chain are separated by at least one carbon atom; with the proviso that L is not adipate or trans-1,4-cyclohexanedicarboxylate; wherein the MOF has a BET specific surface area < 500 $m^2/g$, preferably <400 $m^2/g$.

2. MOF material according to claim 1, wherein the linkers L are acyclic saturated aliphatic or heteroaliphatic, preferably aliphatic, polycarboxylate linkers.

3. MOF material according to claim 1 or 2, wherein the linkers L are aliphatic or heteroaliphatic, preferably aliphatic, dicarboxylate linkers.

4. MOF material according to any one of claims 1 to 3, wherein the linkers L are naturally occurring compounds bearing at least two carboxylate groups, such as naturally occurring amino acids.

5. MOF material according to any one of claims 1 to 4, wherein the linker L is chiral.

6. MOF material according to any one of claims 1 to 5, wherein the MOF is constituted of a three-dimensional succession of building units of formula $\mathbf{I_0}$

$$M_6O_4(OH)_4L_xA_y.nH_2O \qquad (\mathbf{I_0})$$

wherein

each occurrence of M independently represents Zr, Ln or Hf or another metal; such as Cu, Co, Ni, Mn, V, Cr, Fe, Ru, Sn, or Nb; wherein at least 60%, preferably at least 65%, preferably at least 70%, of M atoms in the MOF material are Zr, Ln or Hf atoms;
L represents an aliphatic or heteroaliphatic, preferably aliphatic, ligand as defined in any one of claims 1 to 5;
x represents the number of aliphatic or heteroaliphatic, preferably aliphatic, ligands L in the building unit;
y represents the number of A ligands in the building unit, where A is selected from $Cl^-$, $HCO_2^-$ or $MeCO_2^-$; wherein a subset of A ligands in the MOF material may be replaced by ligands independently selected from $OH^-$, $H_2O$, $R^3$-$(SO_3)^-$, $R^3$-$(PO_3)H^-$, wherein $R^3$, for each occurrence, independently represents OH, $C_{1-12}$alkyl, $C_{1-12}$heteroalkyl, $C_{6-10}$aryl, $C_{5-10}$heteroaryl; where each of the foregoing alkyl and heteroalkyl moiety may be linear or branched and cyclic or acyclic; and
n represents the average number of guest water molecules that may be present per building unit in the MOF material.

**7.** MOF material according to any one of claims 1 to 6, wherein the ligand L has the following structure:

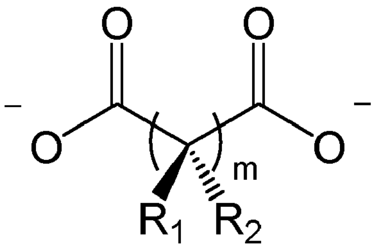

wherein

m represents an integer from 1 to 12; and
each occurrence of $\mathbf{R_1}$ and $\mathbf{R_2}$ independently represents H, a halogen atom, -OH, -$OR_A$, -$NH_2$, -$NR_BR_C$, -C(=O)OH, -C(=O)$R_D$, -$SO_3H$, -SH, -$SR_E$, -$P(R_F)_3$; or one occurrence of $R_1$ and $R_2$ taken together with the carbon atom to which they are attached may form a C=O or a C=C-C(=O)$OR_G$ moiety;

wherein $R_A$, $R_B$, $R_C$, $R_D$, and $R_E$, for each occurrence, independently represent a linear or branched $C_{1-10}$ alkyl, $C_{1-10}$heteroaryl or $C_{6-10}$ aryl moiety; $R_F$, for each occurrence, independently represents a $C_{1-10}$heteroaryl or $C_{6-10}$ aryl moiety; and $R_G$, for each occurrence, independently represents H or a linear or branched $C_{1-10}$ alkyl, $C_{1-10}$heteroaryl or $C_{6-10}$ aryl moiety;
wherein each of the foregoing aryl or heteroaryl moieties may be, individually, further substituted with one or more linear or branched $C_{1-6}$ alkyl, $C_{1-10}$heteroaryl or $C_{6-10}$ aryl moieties; and wherein each of the foregoing alkyl moieties may preferably be acyclic.

**8.** MOF material according to any one of claims 1 to 7, wherein the ligand L has one of the following structures:

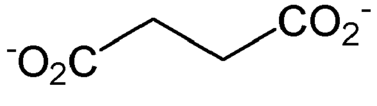
,
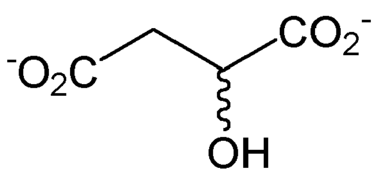
,

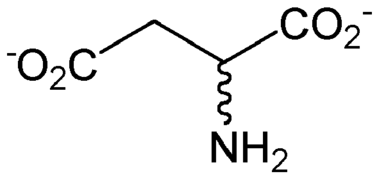, 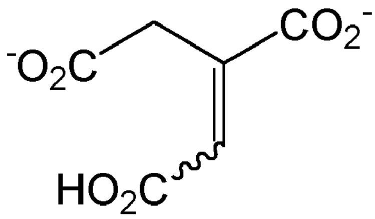,

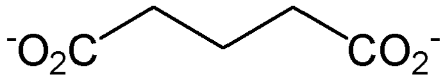, 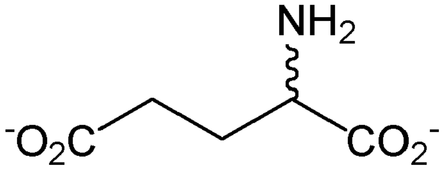,

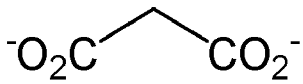, 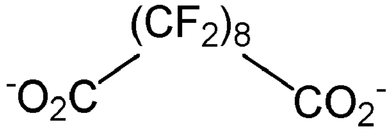

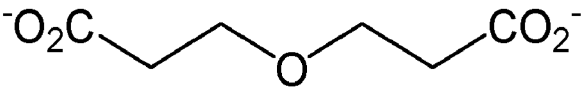

or

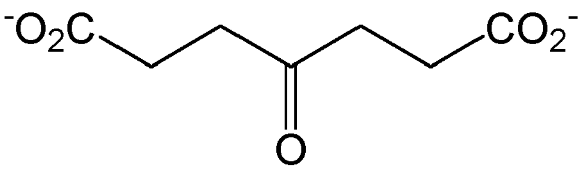;

preferably L-aspartate or L-glutamate.

**9.** MOF material according to any one of claims 1 to 8, wherein M represents Zr.

**10.** A process for preparing a Zr-, Hf- or Ln-based metal-organic framework (MOF) material as defined in any one of claims 1 to 9, comprising at least one reaction step (i) of reacting in a suitable solvent system, preferably water or a mixture of water and at least one acid, preferably carboxylic acid, more preferably monocarboxylic:

- at least one metal precursor selected from any Zr-, Hf- and Ln-cluster containing compounds except $Zr(SO_4)_2$, such as $ZrCl_4$, $ZrBr_4$, $ZrI_4$, $ZrOCl_2$, $ZrOSO_4$, $ZrO(NO_3)_2$, $Zr(NO_3)_4$, $Zr(OR_4)_4$, $HfCl_4$, $HfBr_4$, $HfI_4$, $HfOCl_2$, $HfOSO_4$, $Hf(SO_4)_2$, $HfO(NO_3)_2$, $Hf(NO_3)_4$, $Hf(OR_5)_4$, $LnCl_4$, $LnBr_4$, $LnI_4$, $LnOCl_2$, $LnOSO_4$, $Ln(SO_4)_2$, $LnO(NO_3)_2$, $Ln(NO_3)_4$, $Ln(OR_6)_4$ ; wherein $R_4$, $R_5$, and $R_6$, for each occurrence, independently represent H, $CO_2$, acyl such as Ac, or a linear or branched $C_{1-10}$ alkyl or $C_{6-10}$ aryl moiety; wherein each of the foregoing aryl moieties may be, individually, further substituted with one or more linear or branched $C_{1-6}$ alkyl or $C_{6-10}$ aryl moieties; and wherein each of the foregoing alkyl moieties may preferably be acyclic;
- a ligand precursor L' selected from aliphatic or heteroaliphatic, preferably aliphatic, polyfunctionalized compounds comprising two or more -COOH groups and/or functional groups which may yield a -COOH group upon oxidation, such as $-COOR_7$, -CN, -CHO, Me, $-CONR_8R_9$;

wherein $R_7$, $R_8$ and Rg, for each occurrence, independently represent a linear or branched $C_{1-10}$ alkyl, $C_{1-10}$heteroaryl or $C_{6-10}$ aryl moiety; or $R_8$ and Rg together with the nitrogen atom to which they are attached may form a 5- to 6-membered heretocyclic moiety;
wherein each of the foregoing aryl moieties may be, individually, further substituted with one or more linear

or branched $C_{1-6}$ alkyl, $C_{1-10}$heteroaryl or $C_{6-10}$ aryl moieties; and wherein each of the foregoing alkyl moieties may preferably be acyclic.

**11.** A process according to claim 10, wherein the ligand precursor L' is an acyclic saturated aliphatic or heteroaliphatic, preferably aliphatic, polyfunctionalized compound bearing two or more -COOH groups and/or functional groups which may yield a -COOH group upon oxidation, as defined in claim 10.

**12.** A process according to claim 10 or 11, wherein the ligand precursor L' is an aliphatic or heteroaliphatic, preferably aliphatic, dicarboxylic acid or ester.

**13.** A process according to any one of claims 10 to 12, wherein the ligand precursor L' is a naturally occurring compound bearing at least two carboxylic groups or carboxylic esters, such as naturally occurring amino acids or esters thereof.

**14.** A process according to any one of claims 10 to 13, wherein the ligand precursor L' is chiral.

**15.** A process according to any one of claims 10 to 14, wherein the ligand precursor L' has the following structure:

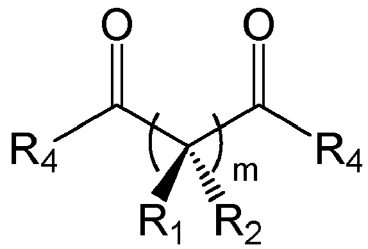

wherein

m represents an integer from 1 to 12; and
each occurrence of $\mathbf{R_1}$ and $\mathbf{R_2}$ independently represents H, a halogen atom, -OH, $-OR_A$, $-NH_2$, $-NR_BR_C$, -C(=O)OH, $-C(=O)R_D$, $-SO_3H$, -SH, $-SR_E$, $-P(R_F)_3$; or one occurrence of $R_1$ and $R_2$ taken together with the carbon atom to which they are attached may form a C=O or a $C=C-C(=O)OR_G$ moiety;

wherein $R_A$, $R_B$, $R_C$, $R_D$, and $R_E$, for each occurrence, independently represent a linear or branched $C_{1-10}$ alkyl, $C_{1-10}$heteroaryl or $C_{6-10}$ aryl moiety; $R_F$, for each occurrence, independently represents a $C_{1-10}$heteroaryl or $C_{6-10}$ aryl moiety; and $R_G$, for each occurrence, independently represents H or a linear or branched $C_{1-10}$ alkyl, $C_{1-10}$heteroaryl or $C_{6-10}$ aryl moiety;
wherein each of the foregoing aryl or heteroaryl moieties may be, individually, further substituted with one or more linear or branched $C_{1-6}$ alkyl, $C_{1-10}$heteroaryl or $C_{6-10}$ aryl moieties; and wherein each of the foregoing alkyl moieties may preferably be acyclic; and

each occurrence of $\mathbf{R^4}$ independently represents -OH, -OMo where $M_0$ represents an akali metal cation, a halogen atom, or a $-OR^5$, $-O-C(=O)R^5$ or $-NR^5R^{5'}$ moiety, wherein $R^5$ and $R^{5'}$ independently represent $C_{1-12}$alkyl; preferably each occurrence of $R^4$ represents OH.

**16.** A process according to any one of claims 10 to 15, wherein the ligand precursor L' has one of the following structures:

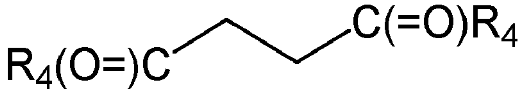

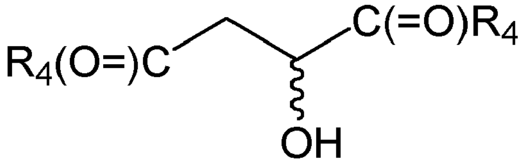

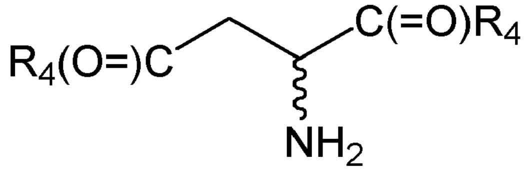

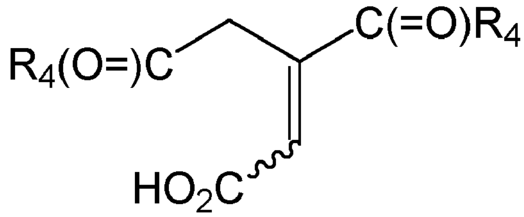

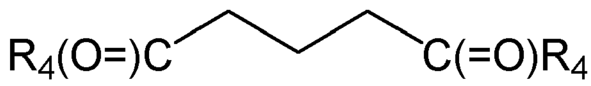

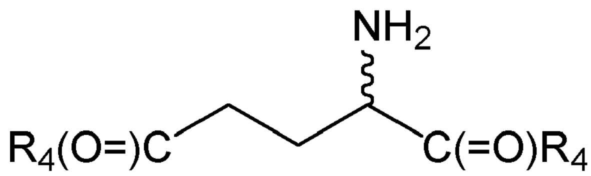

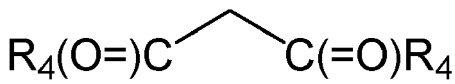

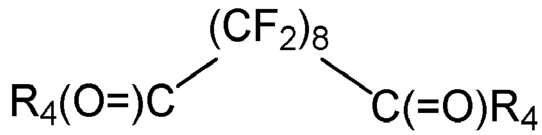

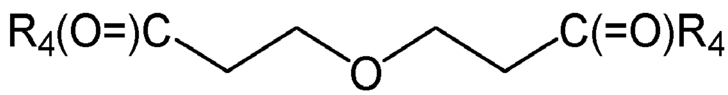

or

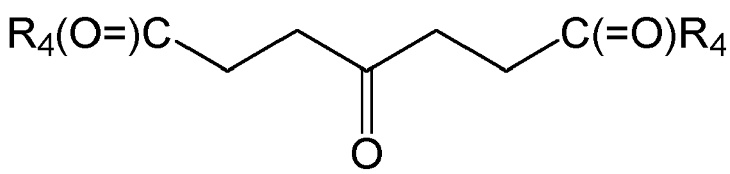

;

wherein $R_4$ is as defined in claim 15, preferably $R_4$ represents OH.

**17.** Use of a material as defined in any one of claims 1-9, as separation/purification material, or as proton conductive material (fuel cells), or as water sorption material, or as catalyst.

**18.** Use according to claim 17, as separation/purification material, for gas separation or small molecule separation.

**19.** Use according to claim 18, for $CO_2/N_2$ separation, separation of chiral molecules, size/shape-based molecule separation, or separation/extraction of metallic ions.

**20.** Use according to claim 17, as water sorption material, in adsorption-type cooling/heating systems.

**21.** Use according to claim 17, as catalyst, in biomass conversion systems/reactions.

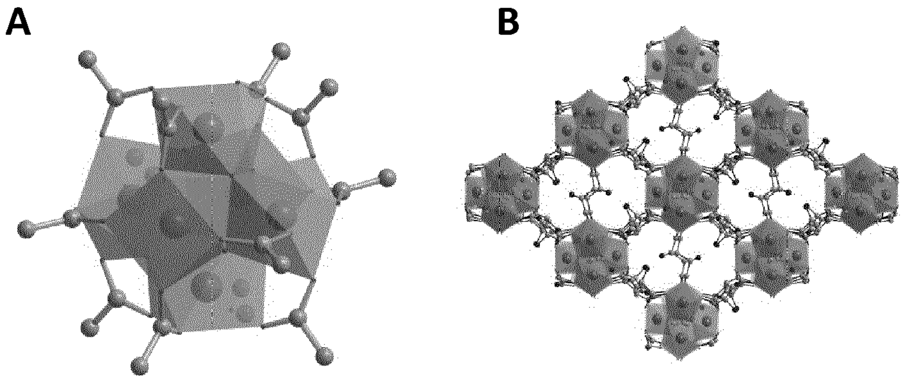


FIGURE 1

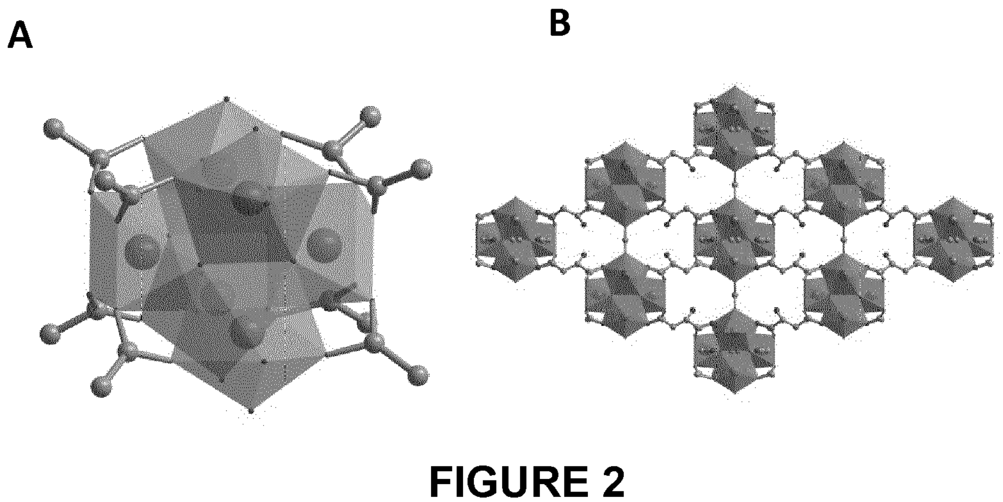


FIGURE 2

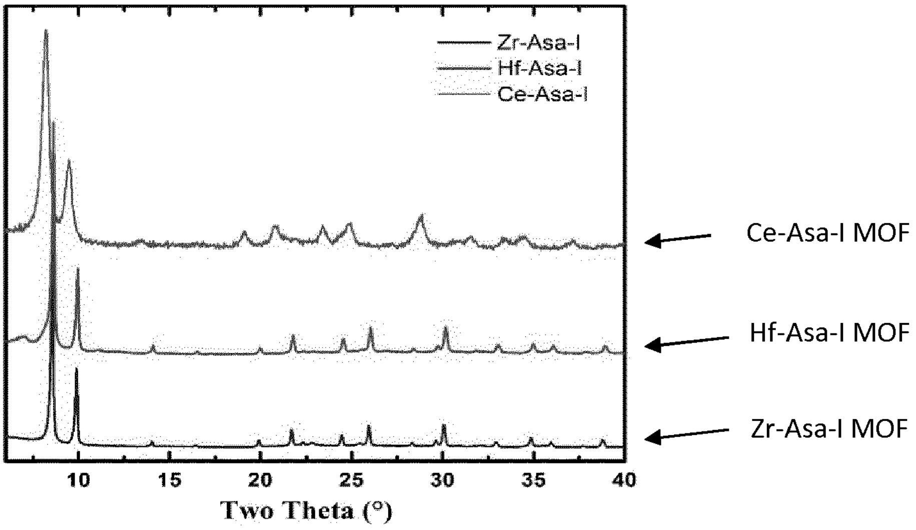


**FIGURE 3**

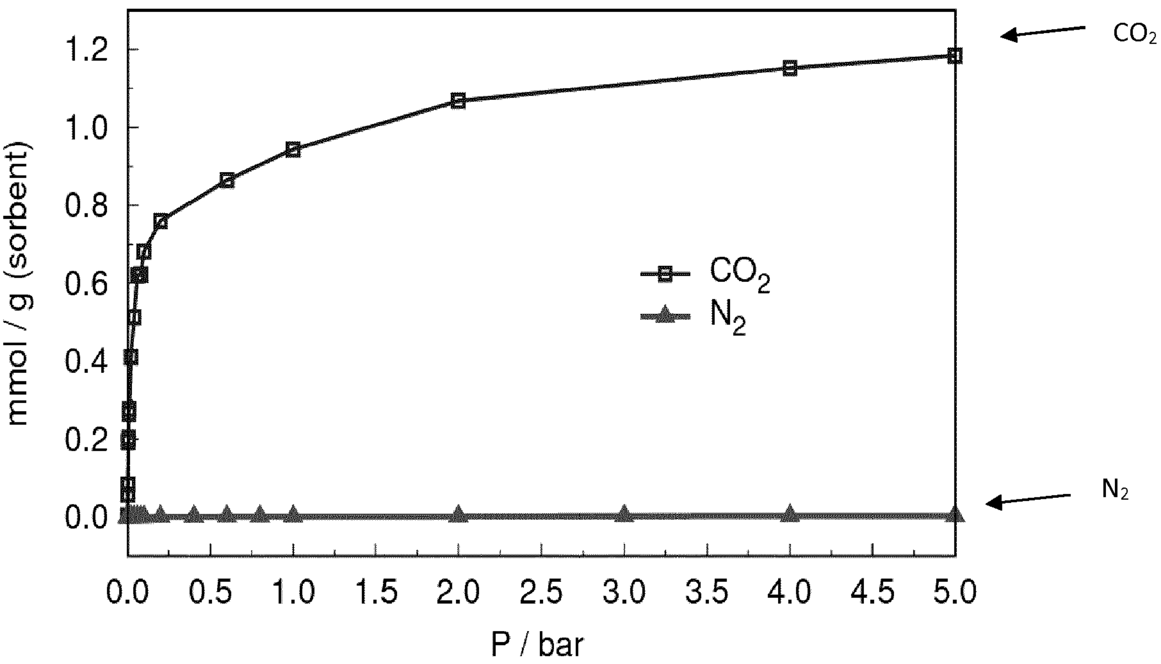


**FIGURE 4**

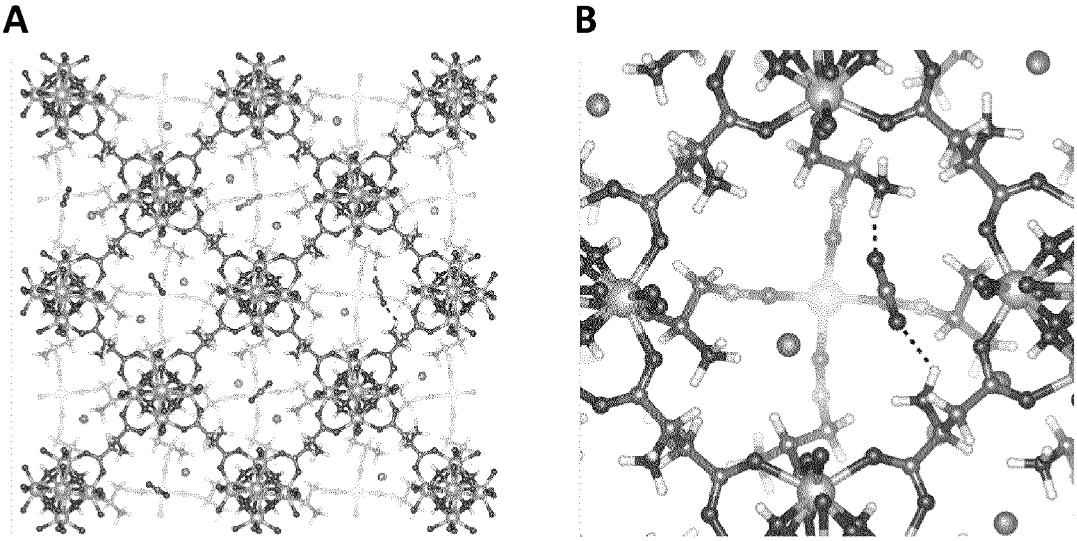


FIGURE 5

Europäisches Patentamt
European Patent Office
Office européen des brevets

# EUROPEAN SEARCH REPORT

Application Number
EP 17 30 6798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 597 643 B1 (ALBENZE ERIK [US] ET AL) 21 March 2017 (2017-03-21)<br>* column 11, last paragraph; claims 1,4,9; examples 1,4 * | 1-4, 6-13, 15-21 | INV.<br>B01J20/22<br>C07F19/00<br>C07F5/00<br>C07F7/00 |
| X | WO 2015/142944 A2 (UNIV CALIFORNIA [US]) 24 September 2015 (2015-09-24)<br>* page 56, paragraph 124 - paragraph 125; claims 1,16-21 * | 1,3,4,6, 9,10,12, 13,17-21 | |
| X | DATABASE WPI<br>Week 201773<br>Thomson Scientific, London, GB;<br>AN 2017-658056<br>XP002781243,<br>& CN 107 163 069 A (UNIV ZHEJIANG)<br>15 September 2017 (2017-09-15)<br>* abstract * | 1-8, 10-16,19 | |
| X | GESA WIMANN ET AL: "Modulated synthesis of Zr-fumarate MOF",<br>MICROPOROUS AND MESOPOROUS MATERIALS, ELSEVIER, AMSTERDAM, NL,<br>vol. 152, 5 December 2011 (2011-12-05), pages 64-70, XP028443331,<br>ISSN: 1387-1811, DOI: 10.1016/J.MICROMESO.2011.12.010<br>[retrieved on 2011-12-11]<br>* abstract * | 1,3,4,6, 9-13 | TECHNICAL FIELDS SEARCHED (IPC)<br>B01J<br>C07F |

-/--

The present search report has been drawn up for all claims

| Place of search | Date of completion of the search | Examiner |
|---|---|---|
| The Hague | 23 May 2018 | Voyiazoglou, D |

3

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches Patentamt
European Patent Office
Office européen des brevets

# EUROPEAN SEARCH REPORT

Application Number
EP 17 30 6798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAN BAI ET AL: "Zr-based metal-organic frameworks: design, synthesis, structure, and applications", CHEMICAL SOCIETY REVIEWS, vol. 45, no. 8, 1 January 2016 (2016-01-01), pages 2327-2367, XP55446790, ISSN: 0306-0012, DOI: 10.1039/C5CS00837A * abstract; table 1 * ----- | 1,3,4,6, 9,10,12, 13,17-21 | |
| X | RICHARD F. D'VRIES ET AL: "Exploring the system Lanthanide/succinate in the formation of porous metal-organic frameworks: experimental and thoretical study", CRYSTAL GROWTH & DESIGN., vol. 15, 2015, pages 3015-3023, XP002781244, ACS, WASHINGTON, DC. ISSN: 1528-7483 * abstract; table 2 * ----- | 1-4,6-8, 10-13, 15,16 | TECHNICAL FIELDS SEARCHED (IPC) |
| X | CARLOS ALBERTO FERNANDES DE OLIVEIRA ET AL: "MOF@activated carbon: a new material for adsorption of aldicarb in biological systems", CHEMICAL COMMUNICATIONS, vol. 49, no. 58, 1 January 2013 (2013-01-01), page 6486, XP55134707, ISSN: 1359-7345, DOI: 10.1039/c3cc40449h * page 6486, left-hand column * ----- | 1-4,6-8, 10-13, 15-18 | |

The present search report has been drawn up for all claims

3

| Place of search | Date of completion of the search | Examiner |
|---|---|---|
| The Hague | 23 May 2018 | Voyiazoglou, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 17 30 6798

This annex lists the patent family members relating to the patent documents cited in the above-mentioned European search report. The members are as contained in the European Patent Office EDP file on
The European Patent Office is in no way liable for these particulars which are merely given for the purpose of information.

23-05-2018

| Patent document cited in search report | Publication date | Patent family member(s) | Publication date |
|---|---|---|---|
| US 9597643 B1 | 21-03-2017 | NONE | |
| WO 2015142944 A2 | 24-09-2015 | CN 107148422 A | 08-09-2017 |
| | | EP 3074405 A2 | 05-10-2016 |
| | | JP 2017512637 A | 25-05-2017 |
| | | KR 20160134644 A | 23-11-2016 |
| | | US 2017081346 A1 | 23-03-2017 |
| | | WO 2015142944 A2 | 24-09-2015 |
| CN 107163069 A | 15-09-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 9662632 B
- CN 103464001
- CN 103331151
- EP 2230288 A
- EP 2049549 A


### Non-patent literature cited in the description


- **ROUQUEROL et al.** Adsorption by powders and porous solids. Academic Press, 1999
- Commensurate Adsorption of Hydrocarbons and Alcohols in Microporous Metal Organic Frameworks. *Chemical Reviews,* 2012, vol. 112, 836-868
- Ionic metal-organic frameworks (iMOFs): Design principles and applications. *Coordination Chemistry Reviews,* 2016, vol. 307, 313-341
- **HA L. NGUYEN ; FELIPE GÁNDARA ; HIROYASU FURUKAWA ; TAN L. H. DOAN ; KYLE E. CORDOVA ; OMAR M. YAGHI.** *J. Am. Chem. Soc.,* 2016, vol. 138, 4330-4333
- **VALENTINA G. PONOMAREVA ; KONSTANTIN A. KOVALENKO ; ALEXEI P. CHUPAKHIN ; DANIL N. DYBTSEV ; ELENA S. SHUTOVA ; VLADIMIR P. FEDIN.** *J. Am. Chem. Soc.,* 2012, vol. 134, 15640-15643
- **HERBST et al.** MOF catalysts in biomass upgrading towards value-added fine chemicals. *Cryst. Eng. Comm.,* 2017, vol. 19, 4092-4117
- **Y. K. HWANG ; D.-Y. HONG ; J. S. CHANG ; S. H. JHUNG ; Y.-K. SEO ; J. KIM ; A. VIMONT ; M. DATURI ; C. SERRE ; G. FÉREY.** *Angew. Chem. Int. Ed,* 2008, vol. 47, 4144
- **Y. LEE ; S. KIM ; J. K. KANG ; S. M. COHEN.** *Chem. Commun.,* 2015, vol. 51 (5735), 2
- **M. KIM ; J. F. CAHILL ; H. FEI ; K. A. PRATHER ; S. M. COHEN.** *J. Am. Chem. Soc.,* 2012, vol. 134, 18082-18088
- **WENBIN LIN.** *J. Am. Chem. Soc.,* 2017, vol. 139, 15600-15603